Europäisches Patentamt

European Patent Office

Office européen des brevets

(11) Publication number: **0 306 294 B1**

(12) **EUROPEAN PATENT SPECIFICATION**

(45) Date of publication of patent specification: **11.11.92**   (51) Int. Cl.⁵: **C02F 1/04**, C02F 1/36, C02F 1/48

(21) Application number: **88308064.0**

(22) Date of filing: **31.08.88**

(54) **Apparatus for treating photographic process waste liquor.**

(30) Priority: **02.09.87 JP 219643/87**
**01.11.87 JP 276413/87**
**29.11.87 JP 301359/87**
**18.03.88 JP 65371/88**

(43) Date of publication of application:
**08.03.89 Bulletin 89/10**

(45) Publication of the grant of the patent:
**11.11.92 Bulletin 92/46**

(84) Designated Contracting States:
**DE FR GB IT NL**

(56) References cited:
**DE-A- 2 427 651**
**GB-A- 610 036**
**US-A- 3 367 848**
**US-A- 3 995 298**

(73) Proprietor: **KONICA CORPORATION**
**26-2, Nishishinjuku 1-chome, Shinjuku-ku**
**Tokyo 160(JP)**

(72) Inventor: **Kurematsu, Masayuki**
**c/o Konica Corporation 1, Sakuramachi**
**Hino-shi Tokyo(JP)**
Inventor: **Koboshi, Shigeharu**
**c/o Konica Corporation ,1, Sakuramachi**
**Hino-shi Tokyo(JP)**
Inventor: **Goto, Nobutaka**
**c/o Konica Corporation 1, Sakuramachi**
**Hino-shi Tokyo(JP)**
Inventor: **Takabayashi,Naoki**
**c/o Konica Corporation 1, Sakuramachi**
**Hino-shi Tokyo(JP)**

(74) Representative: **Wood, Anthony Charles et al**
**Urquhart-Dykes & Lord 91 Wimpole Street**
**London W1M 8AH(GB)**

**Description**

BACKGROUND OF THE INVENTION

This invention relates to an apparatus for treating waste liquor produced concomitantly with development processing of light-sensitive photographic materials using an automatic processing machine for photography (hereinafter abridged as "photographic process waste liquor" or "waste liquor") through concentration by evaporation, and, more particularly, to an apparatus for treating photographic process waste liquor through concentration by evaporation, that is suited for treating the waste liquor by installing the apparatus inside the automatic processing machine or in the vicinity thereof.

In general, the photographic processing of light-sensitive silver halide photographic materials is carried out by combining steps employing processing solutions having one or more of the functions such as developing fixing, washing, etc. in the case of black and white light-sensitive photographic materials. In the case of light-sensitive color photographic material processing includes color developing, bleach-fixing (or bleaching and fixing), washing, stabilizing, etc.

Then, in the photographic processing to process a large quantity of light-sensitive materials, there is employed a means by which the performance of processing solutions is constantly maintained by removing (while replenishing components consumed by the processing) components that may be thickened or concentrated during the processing by dissolving-out in the processing solution or by evaporation (for example, bromide ions in the developing solution, silver complex salts in the fixing solution, etc.). A replenishing solution or replenisher is supplied to the fixing solution for the purpose of the above replenishing, and a part of the processing solution is thrown away for the purpose of removing the above thickened or concentrated components in the photographic processing.

Recent years, because of environmental pollution or for economical reasons, replenishing solutions for photographic development processing solutions as well as washing water which is a replenishing solution for washing are undergoing a change such that they are used in a system in which the quantity of the replenishment has been greatly decreased. The photographic process waste liquor, however, is led from a processing tank of the automatic processing machine through a waste liquor pipe and thrown away in sewerages or the like after being diluted with waste liquor of washing water or cooling water for the automatic processing machine.

However, because of tightened regulation in recent years against environmental pollution, although it is possible to throw away washing water or cooling water in sewerages or rivers, it has been made substantially impossible to throw away the photographic processing solutions other than these [for example, developing solutions, fixing solutions, color-developing solutions, bleach-fixing solutions (or bleaching solutions or fixing solutions), stabilizing solutions, etc.]. For this reason, every photographic processing dealer has the waste liquor collected by dealers specialized in the waste liquor treatment, or installs equipment for pollution-preventive treatment. However, the way of placing the waste liquor treatment to dealers' care may necessarily require a considerable space for keeping the waste liquor stored and may also be very expensive from the viewpoint of cost. Also, the equipment for pollution-preventive treatment may involve disadvantages such that it requires a very large initial investment (or initial cost) and a considerably large space for the equipment.

Accordingly, in general, the waste liquor is collected by waste liquor collecting dealers, and made harmless after secondary and tertiary treatments. However, because of an increase in the cost for the collection, not only the fees for taking over the waste liquor is increasing year by year, but also the dealers are not willing to come to collect the waste liquor to miniature photofinishing laboratories because of its low collection efficiency, thus causing problems such that shops are full of waste liquor.

For the purpose of solving these problems and with an aim of making it possible to readily carry out the treatment of the photographic process waste liquor also in the miniature photofinishing laboratories, it has been researched to heat the photographic process waste liquor to carry out evaporation of water to dryness or effect solidification as disclosed, for example, in Japanese Utility Model Unexamined Publication No. 70841/1985.

Incidentally, in the case where the photographic process waste liquor is treated by evaporation, harmful or remarkably ill-smelling gas such as sulfur dioxide, hydrosulfide and ammonia gas are generated. This is caused by decomposition of sulfur series compounds used for or particular to the fixing solution and bleach-fixing solution contained in the photographic process waste liquor, for example, thiosulfates, sulfites, etc.

Moreover, ammonium salts contained in the photographic processing waste liquor concern with the genaration of odor to generate ammonia gas. When the concentration by evaporation further proceed to

2

EP 0 306 294 B1

lower pH, sulfite gas is generated and sulfur series odors such as hydrogen sulfite is also remarkably generated.

Moreover, at the time of the evaporation treatment, the water or the like contained in the photographic process waste liquor is vaporized in the form of vapor to increase the volume and increase the pressure in a evaporating vessel. Therefore, because of this pressure, the above harmful or ill-smelling gases may necessarily leak outside the evaporation treatment apparatus to cause great difficulties from the viewpoint of the work environment.

Now, to solve these problems, Japanese Utility Model Unexamined Publication No. 70841/1985 disclosed a method in which an exhaust gas treating section comprising activated carbon or the like is provided at an exhaust pipe section of the evaporation treatment apparatus. This method, however, has a serious disadvantage that the vapor from a large quantity of water contained in the photographic process waste liquor causes sweating or moisture condensation at the exhaust gas treating section, so that a gas absorption treatment agent is covered with the water to instantaneously lose its gas absorption ability. Thus, this method has not been put into practical use.

To solve these problems, the present inventors have previously proposed, in carrying out the evaporation treatment of photographic process waste liquor, a method of, and an apparatus for, treating photographic process waste liquor, provided with a cooling and condensing means capable of condensing the vapor generated by the evaporation and further treating the condensate water generated by condensation, simultaneously also treating uncondensed components, to discharge them to the outside.

However, the following problems were found in the above proposal. Specifically, the vapor generated by evaporation treatment, which is condensed by a cooling and condensing means, may be discharged outside the apparatus in a higher proportion without being condensed if the cooling and condensing efficiency is low. Even if it is treated by activated carbon, ill-smelling harmful gas may be discharged outside the apparatus also in a higher proportion. Further, there are instances where the condensate water produced by condensation by the cooling and condensing means falls when thrown away, or has so a high burden to environmental pollution that it can not be discharged into sewerages or the like as it is. Still further, sulfur series bad odor is generated from the condensed liquor and also sufficient effect cannot be expected for lowering of iodine consumption amount by activated carbon treatment.

According to the invention there is provided an apparatus for treating photographic process waste liquor in which the photographic process waste liquor stored in an evaporation means is heated by a heating means having a heat applying capacity of 20 W/cm$^2$ or less and concentrated by evaporration, characterised in that the apparatus further comprises a filter means for separating a precipitate generated by concentration by evaporation due to heating by the heating means and to discharge the precipitate from a liquid fraction and in that the liquid fraction is recycled.

There is further provided a method for treating photographic process waste liquor in which the photographic process waste liquor stored in an evaporation means is heated at a rate of 20 W/cm$^2$ or less and concentrated by evaporation, characterised in that precipitate generated by concentration due to the evaporation of liquid caused by the heating is separated and discharged from the liquid fraction by a filter means and in that the liquid fraction is recycled.

The present inventors have subsequently conducted various researches and experiments to remove such odor components and resultingly found that an ammonia gas amount existing in a vapor generated by concentration by evaporation can be reduced to a great extent by applying a magnetic field to a phenomenon particular to such a photographic process waste liquor, and further that the generation of sulfur series odor generated by progress of condensation can be inhibited to a great extent.

The present inventors have further conducted various researches and experiments to remove such odor components and resultingly discovered that, when the photographic process waste liquor is heated and boiled in the heating means and large vapor cells or vapor bubbles are produced, the large vapor cells or bubbles are heated and then the photographic process waste liquor to be evaporated is superheated, resulting in thermal decomposition of the photographic process waste liquor, generrattion of hydrogen sulfide and ammonia gas, and lowering of thermal efficiency, etc. Accordingly, they have discovered that, if the removal, separation or release of vapor cells from the heating means for heating the photographic process waste liquor is accelerated, the boiling of the photographic process waste liquor can be effected with minute vapor cells, resulting in alleviation of heating of vapor cells and no generation of thermal decomposition of the photographic process waste liquor by superheat of the photographic process waste liquor to be evaporated. The above problems of thermal decomposition and lowered thermal effeciency can be dissolved by such treatment and, accordingly, the generation of odor such as hydrogen sulfide and ammonia gas generated with the progress of condensation to a great extent can be inhibited and the thermal efficiency is enhanced.

3

## BRIEF DESCRIPTION OF THE DRAWINGS

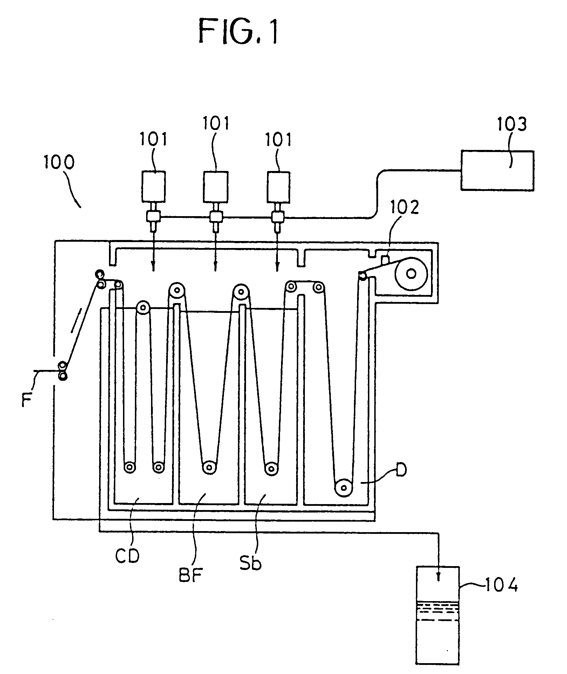

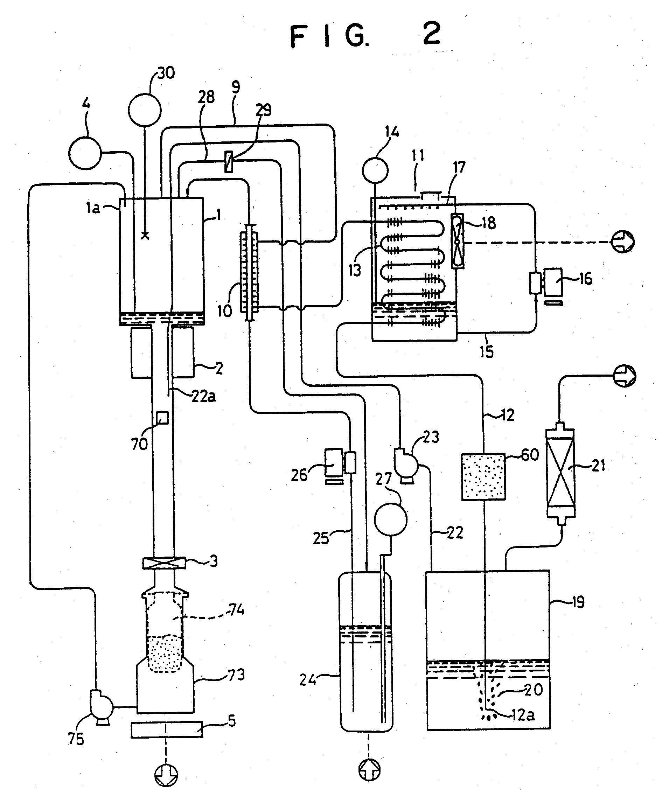

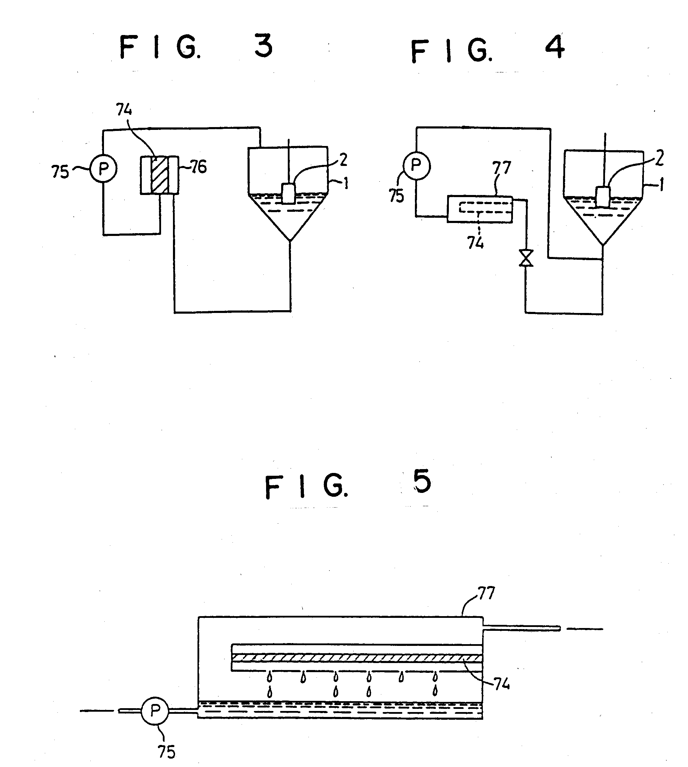

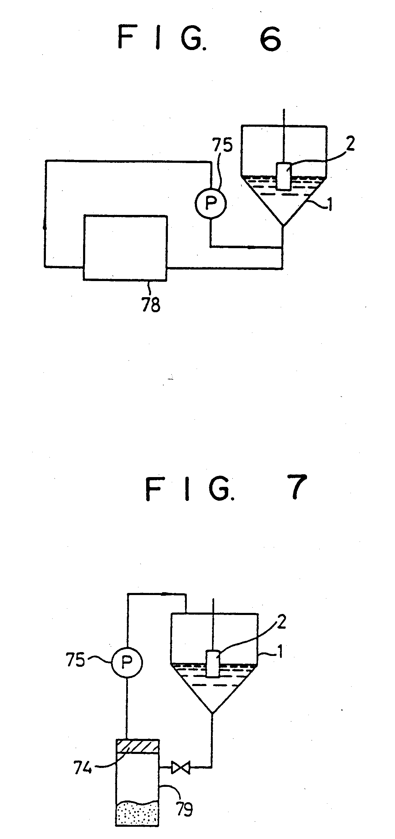

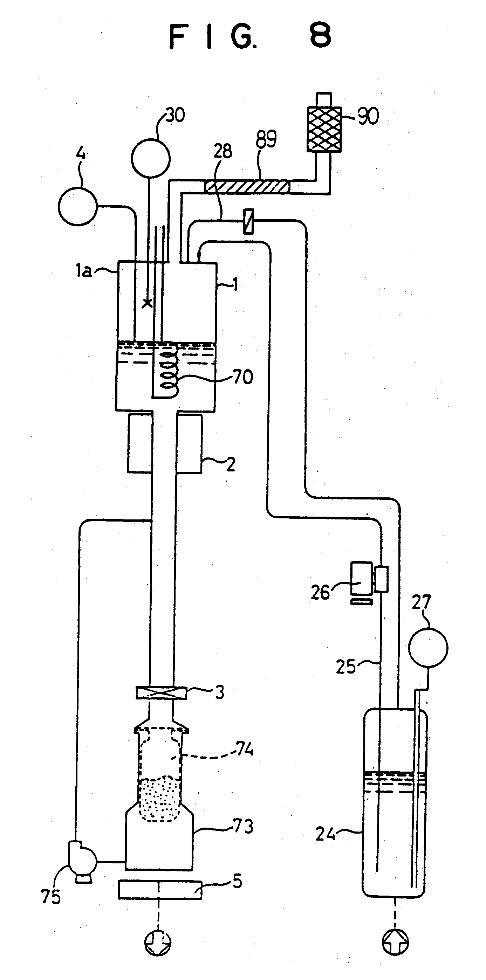

Fig. 1 is a schematical view of an automatic processing machine. Figs. 2 to 24 are schematical constitutional views showing examples of the invention.

## DESCRIPTION OF THE PREFERRED EMBODIMENTS

Firstly, setting the heat-applying capacity to 20 $W/cm^2$ will be described.

By setting the heat-applying capacity to 20 $W/cm^2$, partial decomposition of the precipitate is alleviated to inhibit the generation of sulfur series odor and decrease the iodine consumption amount. The heat-applying capacity of the heating means may be in the range of 20 $W/cm^2$ or less, preferably 0.01 to 15 $W/cm^2$, more preferably 5 $W/cm^2$ or less. If the heat-applying capacity is higher than 20 $W/cm^2$, decomposition of the precipitate occurs. On the other hand, if it is lower than 0.01 $W/cm^2$, it is impossible to transmit the heat to the photographic process waste liquor.

In this invention, if a means for accelerating convection of the photographic process waste liquor is provided, partial heating is preferably inhibited. The means for accelerating the convection of the photographic process waste liquor may include a method in which an upper portion of the photographic process waste liquor is directly or indirectly heated by the heating means, a method in which the photographic process waste liquor is forcedly circulated by an arrangement of the apparatus, or a method in which a circulating system separately removing the precipitate is provided. Further, by separating and discharging, using a precipitate separating means, the precipitate which is settled by concentration by evaporation due to heating by use of the heating means. The precipitate settled by heating by use of the heating means is not continuously heated while remaining in the vicinity of the heating means, because the photographic process waste liquor is heated by the heating means and concentrated by evaporation and then the precipitate produced thereby is separately discharged with use of the precipitate separating means.

As the precipitate separating means, filters such as a cylindrical filter and filter bag is used. A centrifugal separator, cyclon, etc. may further be used. In the case where the filter is used, a diameter of the opening is preferably be in the range of 1 to 200 $\mu m$, more preferably 5 to 200 $\mu m$, most preferably 5 to 100 $\mu m$. The precipitate separating means should preferably be designed such that the precipitate in a high concentration is taken out without clogging.

Preferred is to concentrate the photographic process waste liquor by evaporation in the evaporating means, take out the precipitate produced thereby from the lower portion of the evaporating means and recover it to the upper portion, from the viewpoint of ease in taking out and circulation of the precipitate. Further, a step posterior to the precipitate separating means is provided with a waste liquor supplying tank and circulating it to the evaporating means through the waster liquor supplying tank.

Next, the magnetic field generating means used in this invention will be described.

The magnetic field generating means is not particularly limited, but generally used are magnets comprising Fe, Co, Ni, etc. and alloys thereof, or those having a coil shape in which current flows, etc.

The magnetic field generating means, which give a magnetic field to the photographic process waste liquor and/or a vapor generated by evaporation, has a strength of the magnetic field in the range of preferably $10^{-6}$ to 10T (0.01 to $10^5$ gauss,) more preferably $10^{-4}$ to 1T (1 to $10^4$ gauss,) further preferably $10^{-3}$ to $5 \times 10^{-1}$T (10 to $5 \times 10^3$ gauss.) The strength of the magnetic field is measured by a commercially available gauss meter, etc.

The measuring method may include the direct method, the bridge method, the margianl oscillating method, the nucleus introduction method, the free precession method, etc. as described in "Sensor Handbook" (Kabushiki Kaisha Baifukan, published on May 30, 1986 as the first edition, pp. 310 to 314), and this publication also discloses the structure of a means for generating a magnetic field and application examples which can be referred thereto. The strength of the magnetic field is controlled depending on the location on which the magnetic field generating means is arranged and temperature, concentration and the like of the photographic process waste liquor, as desired.

The magnetic field generating means may be located at any portion, so long as it is possible to give a magnetic field to the photographic process waste liquor and/or vapor by evaporation, but may preferably be located at the portion in which it can be in contact with the photographic process waste liquor. The treatment by use of the magnetic field can lower the ammonia gas amount existing in vapor generated by concentration by evaporation to a great extent and further can inhibit generation of sulfur series odor generated with the progress of concentration.

The magnetic field generating means may preferably be coated with polymer, Teflon, etc. for preventing from corrosion. Such a coating is particularly preferable in the case where it is in contact with the photographic process waste liquor and/or vapor generated by evaporation.

The apparatus of this invention is constituted so that the evaporation of the photographic process waste liquor of this invention is proceeded by use of heating by the heating means, and the heating means is provided in the evaporating means.

Further, in this invention, the magnetic field generating means may preferably serve as the heating means, because a single device can possess both functions of heating of the photographic process waste liquor and generating a magnetic field by providing to, e.g. a heater a function of generating a magnetic field, preferably resulting in miniaturization of the apparatus. Such a device can be constituted by forming a resistant material in a coil shape and flowing a current therein to obtain both functions of magnetic field and heating. In this instance, conventional current of 100 V and 50 or 60 cycles cannot generate a magnetic field. Accordingly, it is necessary to change alternating current to direct current.

Next, the removing, separating or releasing means (hereinafter mainly referred to a removing means) of this invention will be described hereinbelow.

The separating means of this invention supplies a gas into the photographic process waste liquor in the evaporating means and stirring the liquor. In this instance, the gas to be supplied is an air, nitrogen, etc., and a supplying amount thereof is 2 % or more, preferably 10 % or more and 100 % or less, more preferably 30 to 50 % of the amount of the generated vapor from the viewpoint of prevention of lowering of heat loss due to overheat of vapor cells.

Moreover, in the case of supplying a gas, though the gas decrease a temperature of the photographic process waste liquor in the evaporating means, the temperature in the evaporating means should preferably be maintained in the range of under the boiling point of the waste liquor and 80 °C or more, more preferably 100 to 90 °C. Further, the position from which the gas is supplied should preferably be in the vicinity of the surface of the heating means, particularly preferably be at a lower section of the heating means as the separation of the vapor cells is steadily effected.

The separating means of this invention is preferably constituted so that the photographic process waste liquor in the evaporating means is forcedly circulated to stir the waste liquor as the vapor cells formed on the surface of the heating means can be separated early in time. The diffusion ratio represented by the asceding linear velocity is preferably 0.05 cm to 1 m/sec, more preferably 2 to 50 cm/sec, further preferably 2 to 20 cm/sec. Those represented by a LHSV value are preferably 100 to 10,000 L/hr, more preferably 300 to 2,000 L/hr.

In this case, preferred is to control the temperature of the photographic process waste liquor in the evaporating means under the boiling point and 80 °C or higher, more preferably 100 to 90 °C.

The separating means of this invention may be constituted so that the heating means in the evaporating means is vibrated. In this instance, the heating means is directly vibrated.

Moreover, the separating means may be constituted so that the photographic process waste liquor may be vibrated by ultrasonic and thereby the photographic process waste liquor is vibrated to accelerate the separation of the vapor cells.

The frequency of the ultrasonic to be used is preferably 10 KHz to 100 KHz, more preferably 15 KHz to 50 KHz. The frequency is set up depending on a portion on which an ultrasonic generating means is provided, and a temperature, concentration of the photographic process waste liquor or the like as desired. The strength of the ultrasonic is preferably in the range of 1 to 300 dB, more preferably 2 to 200 dB.

In this invention, it is preferable to use the separating means in combination with other means, particularly, blowing of air or gas and circulating the condensed photographic process waste liquor may preferably be used in combination.

Further, the heating means or the evaporating means of this invention may be worked in a concave-convex pattern or made to be uneven. In this case, the working is preferably a coating by use of a coating material such as ceramics, e.g. $Al_2O_3$, $TiO_2$, $ZrO_2$, $SnO_2$, metals, metallic oxides, etc., because they have both corrosion resistant and heat resistant properties. In this instance, the particle size of the coating material to be used is 0.1 $\mu$m unit or more, and is coated by use of various flame-spraying techniques.

The coating method may preferably include the electrolytic plating method and the brushing method. In the electrolytic plating method, the surface of the heating means or the evaporating means is plated with massive metals by electrolytic plating. The matal to be plated may include Ni, Cr, etc. Also, particles of nonelectrolyte such as activated charcoal and alumina may be plated on the surface by use of the electrolytic plating method.

Further, the brushing method may include a method in which various particles of alumina, silica alumina, carbon, metal powder, etc. are dispersed in a solvent of adhesives such as Tefron, other organic polymers, etc., and applied on the surface, followed by firmly adhering by use of the heating method.

Moreover, the concave-convex working of this invention may be made by use of the blasting treatment or the sand blasting treatment. These treatments are made by sufficiently scarring the surface with a file or a sand paper to a concave-convex pattern, or by working by use of a rough abrasion treatment to concave-convex pattern. The deeper and finer the scar is, the higher the separation effect of the vapor cells is. The concave-convex working may preferably be a porous concave-convex working as the cells are early separated, and preferably has a thickness of 1 $\mu$m unit or more and less than 10 mm unit. The porous concave-convex working may include the above-mentioned various flame spraying methods, electrolytic plating methods and brushing methods.

Further, in place of such a surface working as described above, a member having been worked in a similar manner may be provided on the surface of the heating means or the evaporating means. For example, sintered metal using metal particles, metal net, etc. are used as a meterial to be worked, and provided on the surface of the heating means or the evaporating means to make the surface porous.

The evaporation means used in this invention may be of any shape, and may be in the shape of a cube, a column, a polygonal pillar including a square pillar, a cone, a polygonal pyramid including a quadrangular pyramid, or a combination of some of these, but may preferably be long in the longitudinal direction so that the difference between the temperature in the vicinity of the heating means and the temperature of the photographic process waste liquor at the bottom part may be made greater. More preferably, the space upper than the surface of the waste liquor in the evaporation vessel may be made as great as possible so as to lessen as far as possible the above-mentioned accidental blowing-off or spouting to be caused by the bumping.

The evaporation vessel may be made of any materials if they are heat-resistant materials such as heat-resistant glass, titanium, stainless steel, carbon steel, and heat-resistant plastic. However, from the viewpoints of the safety and corrosion resistance, preferred are stainless steel (preferably SUS 304 or SUS 316) and titanium.

In this invention, the heating means may comprise a nickrome wire, or may include worked-up heaters such as a cartridge heater, a quartz heater, a Teflon heater, a rod heater and a panel heater or may by a heating means by using micro wave. The heating means may be provided in a waste liquor in the evaporation means, but, in order to better enhance the effect of this invention and at the same time prevent a decrease in thermal efficiency or corrosion that may occur when the photographic process waste liquor is burnt and stuck to the surface of the heating means, it is also preferable to provide it outside the evaporation vessel and heat the waste liquor in the evaporation vessel through the wall of the evaporation vessel.

The heating means may be provided at any position so long as it is possible to heat the waste liquor in the evaporation vessel. However, as described in Japanese Patent Application No. 288328/1986, the heating means may preferably be so provided that the upper part of the photographic process waste liquor in the evaporation means may be heated so as to cause a difference between the temperature of the photographic process waste liquor in the vicinity of the heating means and the temperature at the bottom part of the photographic process waste liquor. In order to more enhance the effect of this invention, the heating means may preferably be so provided that this temperature difference may be controlled to 5°C or more.

The heating means of this invention may be provided so as to bring a conductive material into contact directly with the photographic process waste liquor, and to make a current to flow in the photographic process waste liquor by use of the conductive material to heat it. The conductive material may be constituted by selecting at least one composition from single crystal Si, polycrystal Si, $Ta_2N$, $Ta-SiO_2$, $ZrO_2$, ZrN, TiN, Cr-Si-O, SiC, SiC-Zr, SiC-Cr, SiC-Hf, SiC-Ti, SiC-Mo, SiC-W, SiC-Nb, SiC-Ta, SiC-La, B, B-Mo, B-La, B-Cr, B-Tr, B-Na, B-Ta, W, B-W, B-V, C, C-halogen, C-Si, C-Ge, C-H, Pt, Mo, Mo-Si, $MoSi_2$, CaO, MgO, $Y_2O_3La_2$, $(CrO_4)_3$ and Au, and can inhibit the generation of odor during concentration by evaporation by the catalytic action, effect of current, etc. Also preferred is a heater which employs the above compositions simply as a resistant material and insulates from the photographic process waste liquor. Further, ceramic heaters and the like can be employed. Moreover, by employing the conductive materials, precipitates generated during concentration by evaporation may be plastically deformed to a material having no viscosity which is easily taken out. In this instance, the composition treated can be used as an adsorbent by pulverizing.

The heating means may preferably be constituted so that it is dipped wholly or partially in the photographic process waste liquor to conduct evaporation of the photographic process waste liquor by the heating means for enhancing the waste liquor treating efficiency (processing speed). In this case, the heating temperature is preferably 120 to 130 °C.

The concentration-by-evaporation treatment apparatus of this invention may preferably have the means for condensing the vapor formed by evaporation. In the cooling and condensing means, all sorts of heat exchanging means can be employed, and they may be of any constitution including; (1) a shell and tube type (or multi-tube type, thimble type); (2) a double tube type; (3) a coil type; (4) a helical type; (5) a plate type; (6) a fin tube type; (7) a trombone type; and (8) an air cooling type. Techniques for heat exchange type reboilers may also be used, and there may be employed those of; (1) a vertical thermosiphon type; (2) a horizontal thermosiphon type; (3) an overflow type (kettle type); (4) a forced circulation type; (5) an interpolation type; etc.

Techniques for condenser type heat exchange may further be employed, and there may be used any of those of; (1) a direct condenser type; (2) a built-in-column type; (3) a built-on-top column type; (4) a separate type; etc.

It is also possible to use coolers, and the types of the coolers can be arbitrarily selected. Air cooling type heat exchangers may be also used advantageously, and there may be used any of those of; (1) a forced draft type; and (2) a blowing draft type.

A preferred embodiment is such that this condensing means is constituted as a heat dissipation device provided with a heat dissipation plate (or an air-cooling fun) on a vapor discharge pipe for discharging the vapor formed by evaporation, and has a means for feeding water on this heat dissipation plate. In this instance, the water may preferably be fed on the heat dissipation plate from an upper part of a device comprising the heat dissipation plate in a shower form. The water may be fed, for example, from a faucet of city water on the heat dissipation plate through a valve or solenoid valve if necessary. In this instance, the means for feeding water refers to a faucet of city water, a water feeding pipe, etc. However, preferred is to use stored water, which may preferably be fed on the heat dissipation plate through a water-feeding means including constant rate pumps or non-constant rate pumps as described above. Particularly preferred is to constitute the means so that the stored water may be circulated in such a manner that the water in a stored water tank provided at a lower part of the heat dissipation plate device may be fed in a shower form on the heat dissipation plate through a pump and again stored in the stored water tank at the lower part. In this instance, desired is that a liquid level sensor is provided in the stored water tank so that the short of the stored water can be detected by sending a signal when the liquid level become lower than a given level, and the water is again fed.

The condensing means may preferably be constituted as the heat dissipation plate device provided with the heat dissipation plate (or air cooling fun) on the vapor discharge pipe for discharging the vapor formed by evaporation, and, when there is provided the means for feeding water on this heat dissipation plate, it is preferably simultaneously provided with a fan for air cooling. However, in this instance, particularly preferred is that the fan for air cooling is provided in the manner that the air can be discharged outside the concentration-by-evaporation treatment apparatus of this invention through the heat dissipation plate device, as it is thereby possible to prevent the condensation from occurring in electric equipment sections in the concentration-by-evaporation treatment apparatus of this invention.

The condensate water obtained by cooling and condensing the vapor formed by evaporation is stored in a tank for storing the condensate water (i.e., a stored liquid tank). This stored liquid tank may preferably be provided in the inside of the concentration-by-evaporation treatment apparatus of this invention as the space can be thereby saved, and, in this instance, the stored liquid tank may preferably be placed on a pedestal capable of being pulled out, for the purpose of improving the workability.

Further, the constitutions of the evaporating means, the heating means and the condensing means of this invention are described in detail in Japanese Patent Applications No. 69435/1987, No. 69456/1987 and No. 69437/1987.

In the instanse where the above magnetic field is employed, the appratus of this invention may preferably be constituted so that the photographic process waste liquor is condensed by evaporation in the evaporating means and the resulting precipitate is taken out from a lower portion of the evaporating means from the viewpoint of ease in taking out, because of the decreased precipitates and reduced viscosity thereof due to the magnetic field treatment.

Further, preferred is to provide an adsorbing column in which at least a part of gas generated by evaporation of the photographic process waste liquor of this invention is brought into contact with an adsorbent. That is, the generation of the odor can more steadily be suppressed by bringing odor components generated in a trace amount into contact with the adsorbent to adsorb and remove it. Moreover, the frequency of exchanging the adsorbent can be reduced to a great extent by conducting the treatment by the magnetic field.

Preferred specific example of the adsorption by use of the adsorbent is to bring at least a part of vapor and/or condensate water into contact with the adsorbent constituted by selecting at least one substance from the following substances: $CaO$, $MgO$, $La_2(CrO_4)_3$, $ZrO_2$, $Ge$, $Se$, $Te$, $GaP$, $Bi_2Te_3$, $InP$, $CoO$, $Fe_2O$, $FeO_3$, $WO_2$, $VO_2$, $MoS_2$, single crystal $Si$, polycrystal $Si$, $Ta_2N$, $Ta$-$SiO_2$, $ZrN$, $TiN$, $Cr$-$Si$-$O$, $SiC$, $SiC$-$Zr$, $SiC$-$Cr$, $SiC$-$Hf$, $SiC$-$Ti$, $SiC$-$Mo$, $SiC$-$W$, $SiC$-$Nb$, $SiC$-$Ta$, $SiC$-$La$, $B$, $B$-$Mo$, $B$-$La$, $B$-$Cr$, $B$-$Tr$, $B$-$Na$, $B$-$Ta$, $B$-

W, B-V, C, C-halogen, C-Si, C-Ge, C-H, Pt, Mo and Mo-Si.

Moreover, from the viewpoint of efficient removal of odor components, the adosorption material of this invention is preferably constituted by using at least one substance or using in combination and/or mixing substances selected from activated charcoal, clay substance, polyamide type polymeric compound, polyurethane type polymeric compound, phenol resin, epoxy resin, polymeric compound having hydrazide group, polymeric compound containing polytetrafluoroethylene, monovalent or polyvalent alcohol methacrylic acid monoester-polyvalent alcohol methacrylic acid and polyester copolymer.

The adsorbent of this invention may be arranged at a step anterior to a step cooling the vapor generated by concentration by evaporation to bring the vapor with the adsorbent before cooling. Alternatively, the adsorbent may be arranged at a step posterior to the cooling and condensing step to bring the condensate water obtained into contact with the adsorbent.

The activated charcoal to be used in this invention may be any acticated charcoal having adsorbing capacity. As the starting mateiral for the activated charcoal, any of wood material, saw dust, coconut shell, lignite, cattle bone, blood, lignite, brown coal, peat, coal, etc., may be used. With respect to the form, powdery activated charcoal and granular activated charcoal are included, and either one may be available in this invention. For production of powdery activated charcoal, the starting material is pulverized and then carbonized under high temperarure to effect activation. In some cases, activation may be effected by passing steam under high temperature, or alternatively activation may be effected by dipping in a solution of zinc chloride, phosphoric acid, sulfuric acid, an alkali, etc., before calcination to be carbonized. Otherwise, there is also the method in which activation is effected by partial oxidation of heating in air, carbon dioxide or chlorine gas. The charcoal subjected to activation is generally washed with for removal of ash ane chemicals. The granular activated charcoal is prepared by molding charcoal powder with a binder such as tar, pitch, etc., into granules of certain particle sizes, drying and sintering the granules, followed by activation. When coconut shells or coals are employed, they are pulverized and screened, followed by activation by carbonization under high temperature, whereby granular activated charcoal can be obtained.

In this invention regardless of the starting material and the method for activation, either powdery or granular activated charcoal can be used, preferably granular activated charcoal, particularly preferably coconut shell activated charcoal and activated charcoal having molecular sieve ability. The activated charcoal having molecular sieve ability as herein mentioned has slit-like fine pores, and the size of the fine pores should desirably be 6 angstrom or more, with the width being 5 angstrom or less. As to the activated charcoal having such molecular sieving ability, reference can be made to the description in Japanese Unexamined Patent Publication No. 14831/1983.

The clay materials of this invention may include those comprising silica and almina as essential components, further include, for example, silica gel, bentnite, activated clay, acid clay, kaolin, zeolite group such as zeolite, etc. Bentnite is a clay acid comprising hydrous aluminum silicate as a basic substance having montmorilonite as a main ore. Activated clay is a clay substance comprising montmolironite and halocite as its main ore. Acidic clay is a similar clay substance. Kaolin is a clay substance comprising natural hydrous aluminum silicate. Zeolite group such as zeolite is a clay substance comprising natural or synthesized zeolites and having even fine pores and molecular sieve action. Other than zeolite, there may be included sodium fluoride, chabazite, etc.

The polyamide type polymeric compounds of this invention refer to the polymers having acidic-amide bond such as 6-nylon, 6,6-nylon and 6,10-nylon.

The polyurethane type polymeric compounds of this invention refer to the polymeric compounds having urethane bond -NHCOO- in recurring unit in its backbone chain.

The phenol resin of this invention refers to resins obtained from phenols such as phenol, cresol, xylenol and resorcin, with aldehydes such as formaldehyde, acetoaldehyde and furfural and modified resins thereof, preferably phenolformaldehyde resin which is commercially available as, for example, Duolite S-761 (trade name) resin produced by Sumitomo Kagaku Kogyo K.K. and the like.

The polymeric compound having hydrazide group of this invention refer to the polymeric compounds which are obtained by imparting sulfohydrazide group, carbonylhydrazide group and hydrazide group to methylacrylatedivinylbenzene copolymer, styrene-divinylbenzene copolymer and the like.

The polymeric compound containing polytetrafluoroethylene of this invention may include a mixture of polyethylene, polypropylene, polyvinylchloride or the like with polytetrafluoroethylene, or pure polytetrafluoroethylene. Preferably, polytetrafluoroethylene is contained in an amount of 50 % or more.

The monovalent or polyvalent alcohol monomethacrylate which is a component of the monovalent or polyvalent alcohol monomethacrylate - polyvalent alcohol polymethacrylate copolymer in this invention may be any methacrylate copolymer, but preferred are methylmethacrylate, ethylmethacrylate, propylmethacrylate, butylmethacrylate, 2-hydroxy-ethylmethacrylate, 2-hydroxy-propylmethacrylate, etc. The polyvalent alcohol polymethacrylate of a crosslinking monomer may most preferably be ethyleneglycoldimethacrylate, and may also preferably be polyethyleneglycol (n = 1 to 10) such as diethyleneglycol methacrylate, triethyleneglycol dimethacrylate, etc. Further, trimethylolpropanetrimethacrylate, pentaerythritoltetramethacrylate, etc may also be used. Preferred is a porous material. The porous methacrylate copolymer may include those having composition containing 10 to 90 % by weight of monovalent or polyvalent alcohol monomethacrylate. Among them, preferred are those containing 50 % or less of polyvalent alcohol polymethacrylate. Specifically, Amberlite XAD-7,8 and 9 produced by Rohm & Haas Co., etc. are preferably used.

Moreover, this material may preferably be porous and having a large surface area. Preferred is those having specific surface area in the range of about 1 to 3,000 $m^2/g$, further preferred is 100 to 1,000 $m^2/g$. The fine pore diameter may preferably be 4 to 2,000 angstrom.

Among these substances, particular preferred are activated charcoal, clay substance, phenol resins and monovalent or polyvalent alcohol monomethacrylate -polyvalent alcohol polymethacrylate copolymer.

In this invention, as described above, preferred is to further provide a means for cooling and condensing vapor to obtain condensate water, to put at least a part of gas passed through the cooling and condensing means into contact with the adsorbent, and to recover the gas to a step anterior to the step for obtaining said condensate water to circulate it from the viewpoint of improvement in evaporation efficiency. Moreover, odor components in gas can be sufficiently alleviateed by bringing at least a part of gas passed through the means for obtaining condensate water into contact with the adsorbent, further passing the gas through the means for obtaining condensate water to repeat the contact with the adsorbent. Further, a treatment by use of the magnetic field of this invention can alleviate odor. Accordingly, burden to the adsorbent can be reduced thereby.

The gass having been subjected to being into contact with the adsorbent may be recovered to the means for concentrating by evaporation. However, by recovering the gas between a means for concentrating by evaporation and a means for obtaining condensate water so as to circulate, penetration of the cooled gas into the means for condensing by evaporation can preferably be prevented, resulting in an improvement in heat efficiency.

Further, the gas passed through the means for obtaining condensate water may be recovered after direct contact with the adsorbent, or may be brought into contact with through the stored liquid tank. Also, the gas having been in contact with the adsorbent may preferably be forcedly recovered by use of a means such as pump to circulate.

The precipitate generated by concentration by evaporation of the photographic process waste liquor of this invention is taken out through a filter, and, in this instance, the precipitate can be forcedly sucked through the filter by use of pump. In this case, the precipitate can be reduced by treating with a magnetic field and also the viscosity of the precipitate can be lowered. Accordingly, the burden to the filter can be reduced and thereby the filtration of a large amount of precipitate can be conducted without clogging.

Next, typical examples of the photographic processing solutions on which the treatment according to this invention can be carried out will be described in detail. Provided that, in the following, chiefly described are photographic processing solutions used when the photographic materials to be processed are those used for color photography. Almost of all of the photographic process waste liquor are the overflow solutions coming when a light-sensitive silver halide color photographic material is processed by use of these photographic processing solutions.

A color developing solution is a processing solution used in the step of color development processing (i.e., a step of forming a color image, specifically a step of forming a color image by the coupling reaction between an oxidized product of a color developing agent and a color coupler). Accordingly, in usual instances, it is necessary in the step of color development processing to incorporate the color developing agent in the color developing solution, but included here is to incorporate the color developing agent in the color photographic material and carry out the processing with use of a color developing solution or alkali solution (activator solution) containing the color developing agent. The color developing agent contained in the color developing solution is an aromatic primary amine color developing agent, including derivatives of aminophenol types and p-phenylenediamine type derivatives. These color developing agents can be used as the salts of organic acids and iorganic acids. For example, hydrochlorides, sulfates, phosphates, p-toluenesulfonates, sulfites, oxalates, benzenedisulfonates may be used. These compounds are generally used at concentrations of about 0.1 g to about 30 g, preferably about 1 g to 15 g per liter of the color developing solution.

The above aminophenol type developing agent may include, for example, o-aminophenol, p-aminophenol, 5-amino-2-oxytoluene, 2-amino-3-oxy-toluene and 2-oxy-3-amino-1,4-dimethyl-benzene. The color developing solution may contain an alkali agent usually used in developing solutions such as sodium hydroxide, potassium hydroxide, ammonium hydroxide, sodium carbonate, potassium carbonate, sodium sulfate, sodium mathaborate and borax, and may also contain various additives, for example, benzyl alcohol and a halogenated alkali metal such as potassium bromide and potassium chloride, or a development controlling agent such as citrazinic acid and a preservative such as hydroxyalumin and sulfites. Further, it may also appropriately contain every sort of an anti-foaming agent or surface active agent, and an organic solvent such as methanol, dimethylformamide or dimethylsulfoxide. The pH of the color developing solution is generally 7 or higher, preferably 9 to 13.

The color developing solution may also contain an antioxidant such as diethylhydroxyamine, tetronic acid, 2-anilinoethanol, dihydroxyacetone, aromatic dihydric alcohol, hydroxamic acid, bentose or hexose, pyrogallol-1,3-dimethylether, if necessary. In the color developing solution, various chelating agents may also be further used in combination, as a sequestering agent. For example, the chelating agents may include aminopolycarboxylic acid such as ethylenediaminetetraacetic acid and diethylenetriaminopentaacetic acid, organic phosphonic acids such as 1-hydroxyethylidene-1,1-diphosphonic acid, aminopolyphosphonic acids such as aminotri(methylenephosphonic) acid and methylenediaminetetramethylenephosphonic acid, oxycarbonic acids such as succinic acid and gluconic acid, phosphonocarbonic acids such as 2-phosphonobutane-1,2,4-tricarbonic acid, polyphosphoric acids such as tripolyphosphoric acid and hexametaphosphoric acid, polyhydroxy compounds and the like.

A bleach-fixing solution is a solution used in a step of bleach-fixing (a step of oxidizing a metallic silver formed by development to convert it to a silver halide, and then forming a water soluble complex and at the same time effect dye formation at a non-colored portion of a coupler. As to the bleaching agent used in the bleach-fixing solution, any type of agent may be used. For example, the bleach-fixing solution may include metallic complex salts of organic acids in which metallic ions such as iron, cobalt and copper are coordinated in organic acids such as aminopolycarboxylic acid, boric acid and citric acid. The organic acid used for forming such metallic complex salts of the organic acids may include polycarbonic acid or aminopolycarbonic acid.

These polycarbonic acid or aminopolycarbonic acid may be alkali metallic salts, ammonium salts or water-soluble amino acid. Specific examples of them may include ethylenediaminetetraacetic acid, diethylenetriaminepentaacetic acid, ethylenediamine-M-($\beta$-oxyethyl)-N,N,N-triacetic acid, propylenediaminetetraacetic acid, nitrilotriacetic acid, cyclohexanediaminetetraacetic acid, iminodiacetic acid, dihydroxyethlglycinecitric acid (or tartaric acid), ethyletherdiaminetetraacetic acid, glycoaletherdiaminetetraacetic acid, ethylenediaminetetraropionic acid, phenylenediaminetetraacetic acid, disodium ethylenediaminetetraacetic acid disodium salt, ethylenediaminetetraacetic acid tetra(trimethylammonium) salt, ethylenediaminetetraacetic acid tetrasodium salt, diethylenetriaminepentaacetic acid pentasodium salt, ethylenediamine-N-($\beta$-oxyethyl)-N,N,N-triacetic acid soldium salt, propylenediaminetetraacetic acid sodium salt, nitrilotriacetic acid sodium salt, cyclohexanediaminetetraacetic acid sodium salt, and the like. These bleaching agents are used in the range of 5 to 450 g/lit., preferably 10 to 150 g/lit. The bleach-fixing solution may be the solution having the composition containing silver halide fixing agents other than the bleaching agents mentioned above and, if necessary, containing sulfites. Moreover, there may be used the bleaching solution having the composition containing ethylenediaminetetraacetic iron (III) complex salt with a small amount of silver halide such as ammonium bromide other than the silver halide fixing agents mentioned above. Contrarily, there may also be used the bleaching agent having the composition constituted by the combination of ethylenediaminetetraacetic acid iron (III) complex salt bleaching agent and a large amount of silver halides such as ammonium bromide, further the specific bleach-fixing solution having the composition constituted by the combination of ethylenediaminetetraacetic acid iron (III) complex salt bleaching agent and a large amount of halides such as ammonium bromide, and the like. The above halides may also include, in addition to ammonium bromide, hydrochloric acid, hydrobromic acid, lithium bromide, sodium bromide, potassium bromide, sodium iodide, potassium iodide, ammonium iodide, etc.

Typical examples of the above silver halide fixing agents contained in the bleach-fixing solution may include the compounds which can form water-soluble complex salts through the reaction with silver halides as employed in the usual fixing processing, for example, thiosulfates such as potassium thiosulfate, sodium thiosulfate and ammonium thiosulfate, thiocyanates such as potassium thiocyanate, sodium thiocyanate and ammonium thiocyanate, thiourea, thioethers, etc. These fixing agents are used in an amount of 5 g per lit. or more, within the range which can be dissolved, but generally from 70 g to 250 g/lit.

The bleach-fixing solution may sometimes contain various pH buffering agents such as boric acid, borax, sodium hydroxide, potassium hydroxide, sodium carbonate, potassium carbonate, sodium bicarbonate, potassium bicarbonate, acetic acid, sodium acetate and ammonium hydroxide, either singly or as a combination of two or more kinds. Further, various kinds of fluorescent brighteners, defoaming agents or surfactants may be contained. Also, preservatives such as bisulfite adducts, e.g. hydroxylamine, hydrazine,

10

aldehyde compounds, etc., organic chelating agents such as aminopolycarboxylic acids, etc., stabilizers such as nitro alcohol, nitrates, etc., or organic solvents such as methanol, dimethylsulfoamide and dimethylsulfoxide, etc., may be sometimes conveniently contained. Further, the bleach-fixing solution may sometimes contain various bleaching promotors as disclosed in Japanese Unexamined Patent Publication No. 280/1971, Japanese Patent Publications Nos. 8506/1970 and 556/1971, Belgian Patent No. 770,910, Japanese Patent Publications Nos. 8836/1970 and 9854/1978, Japanese Unexamined Patent Publications Nos. 71634/1979 and 42349/1974 added therein.

The bleach-fixing solution may be used at pH of 4.0 or higher, generally at pH 5.0 to 9.5, desirably at pH 6.0 to pH 8.5. To further mention, the most preferable pH is 6.5 to 8.5.

The bleach-fixing processing may be sometimes practiced separately as the bleaching processing with a bleaching solution comprising the above bleaching agent as the main component and the fixing treatment with a fixing solution comprising the above fixing agent as the main component.

The washing-substitutive stabilizing solution is not a conventional stabilizing processing, but it is a processing substituting for water washing and refers to the image stabilizing processing as described in Japanese Unexamined Patent Publication No. 134636/1983, etc., or otherwise Japanese Unexamined Patent Publication No. 126533/1984, etc.

A stabilizing solution includes stabilizing solutions having a function of stabilizing a color image and a function as a hydro-extracting bath for preventing stains such as washing non-uniformity. Besides, a color controlling solution for coloring the color image and an antistatic solution containing an antistatic agent are also included in these stabilizing solutions. When bleach-fixing components are brought into the stabilizing solution from a previous bath, measures are taken to neutralize, desalt and inactivate these so as not to deteriorate the storage stability of dyes.

Components contained in such a stabilizing solution include chelating agents having a stability constant to iron ions, of 6 or more (particularly preferably 8 or more). These chelating agents include organic carboxylic acid chelating agents, organic phosphoric acid chelating agents, polyhydroxyl compounds, inorganic phosphoric acid chelating agents, etc. Among them, preferable chelating agents may include ethylenediaminediorthohydroxyphenylacetic acid, nitrilotriacetic acid, hydroxyethylenediaminetriacetic acid, diethylenetriaminepentaacetic acid, hydroxyethyliminodiacetic acid, diaminopropanoltetraacetic acid, ethylenediaminetetrakismethylenephosphonic acid, nitrilotrimethylenephosphonic acid, 1-hydroxyethylidene-1,1-diphosphonic acid, 1,1-diphosphonoethane-2-carboxylic acid, 2-phosphonobutane-1,2,4-tricarboxylic acid, 1-hydroxy-1-phosphonopropane-1,2,3-tricarboxylic acid, catechol-3,5-disulfonic acid, sodium pyrophosphate, sodium tetrapolyphosphate and sodium hexamethaphosphate. Particularly preferable for the effect of this invention are diethylenetriaminepentaacetic acid, 1-hydroxyethylidene-1,1-diphosphonic acid, and salts of these. These compounds may preferably be used generally in concentration of about 0.1 g to 10 g per liter of the stabilizing solution, more preferably about 0.5 g to 5 g per liter of the stabilizing solution.

The compounds added in the stabilizing solution include ammonium compounds. These are supplied by ammonium salts of various inorganic compounds, and specifically include ammonium hydroxide, ammonium bromide, ammonium carbonate, ammonium chloride, ammonium hypophosphite, ammonium phosphate, ammonium phosphite, ammonium fluoride, acidic ammonium fluoride, ammonium fluoroborate, ammonium arsenate, ammonium hydrogencarbonate, ammonium hydrogenfluoride, ammonium hydrogensulfate, ammonium sulfate, ammonium iodide, ammonium nitrate, ammonium pentaborate, ammonium acetate, ammonium adipate, ammonium lauryltricarboxylate, ammonium benzoate, ammonium carbamate, ammonium citrate, ammonium diethyldithiocarbamate, ammonium formate, ammonium hydrogenmalate, ammonium hydrogenoxalate, ammonium hydrogenphthalate, ammonium hydrogentartarate, ammonium lactate, ammonium malate, ammonium maleate, ammonium oxalate, ammonium phthalate, ammonium pirate, ammonium pyrolidinedithiocarbamate, ammonium salicylate, ammonium succinate, ammonium sulfanilate, ammonium tartalate, ammonium thioglycolate, 2,4,6-trinitrophenol ammonium, etc. These ammonium compounds may be used in an amount ranging from 0.05 to 100 g per liter of the stabilizing solution.

Other compounds added in the stabilizing solution may include pH adjustors such as acetic acid, sulfuric acid, nitric acid, sulfanyl acid, potassium hydroxide, sodium hydroxide and ammonium hydroxide; sodium benzoate, hydroxy benzoic butylate, actibiotic agents, dehydroacetic acid, potassium sorbiate, thiabendazole, ortho-phenylphenol, etc.; and mildew-proofing agents such as 5-chloro-2-methyl-4-isothiazolin-3-one, 2-octyl-4-isothiazolin-3-one and 1-2-benzisothiazolin-3-one, as well as those described in Japanese Unexamined Patent Publication No. 43741/1986 (pages 26 to 30), preservatives such as water-soluble metallic salts, dispersing agents such as ethylene glycol, polyethylene glycol and polyvinyl pyrrolidone (PVP K-15, Rubiscol K-17), hardening agents such as formalin, brightening agents, etc. Among these additive compounds, the ammonium compounds as disclosed in Japanese Unexamined Patent Publication No. 184345/1984 act to control the acidity in image coating weakly acidic which is optimum for pH storage. As the compound to be used together with the ammonium compounds, there is an acid such as sulfuric acid and chloric acid.

Particularly in this invention, particularly preferably used is a washing-substitutive stabilizing solution containing any of the above mildew-proofing agents as there may be produced less tar in the evaporation treatment apparatus when they are used.

The pH value of the stabilizing solution is controlled to 0.1 to 10, preferably 2 to 9, more preferably to pH 4 to 8. It is also preferred that the stabilizing processing step is made a multi-stage tank and a counter-flow system in which the replenisher is replenished from the final stage tank and then successively overflowed to the preceeding stage tanks, whereby the replenished amount can be made smaller. Although water washing treatment is not required at all after the stabilizing treatment, sometimes rinsing, surface washing, etc., with a small amount of water may be conducted within a very short time, if desired.

When stabilizing processing is directly performed subsequent to the bleach-fixing processing treatment step substantially without passing through the water washing step, silver recovery for a short time for recovery of silver or rinsing with warm water, etc., may be sometimes provided between the bleach-fixing bath and the stabilizing bath. After the stabilizing processing, a water draining bath containing a surfactant, etc., may be also provided, but it is preferable to provide no silver recovery bath, rinsing and water drining bath, etc. As these additive treatments, spraying or coating treatment may be sometimes applied.

Also, after the above color developing processing, a conditioning tank may be sometimes provided, and said conditioning tank is used to stop developing and promote bleaching reaction, serving to prevent mixing of the developer into the bleach-fixing solution, thereby reducing its bad influence. Said conditioning tank may contain, for example, a bleaching promoting agent and a buffer agent. As said bleaching promoting agent, organic sulfur compounds are generally employed, such as mercapto compounds or thion compounds. Further, acids or alkali agents such as acetic acid, citric acid, succinic acid, sulfuric acid, sodium hydroxides, etc., may be employed for controlling pH of the conditioner. These bleaching promoting agent or buffer agents may be added in amounts of 0.001 g to 100 g per liter of the conditioner. Also, other than the above additives, chelating agents, etc., may be sometimes added.

In instances in which the light-sensitive materials to be processed are those for use in negatives, an aldehyde derivative may be added in this stabilizing solution for negatives, for the purpose of improving the storage stability of photographic images.

In the above stabilizing solution for negatives, all sorts of additives, for example, an irregular droplet preventive material such as siloxane derivatives, a pH adjustor such as boric acid, citric acid, phosphoric acid, acetic acid, sodium hydroxide, sodium acetate, potassium citrate, a hardening agent such as potassium alum and chrome alum, an organic solvent such as methanol, ethanol and dimethylsulfoxide, a moisture conditioner such as ethylene glycol and polyethylene glycol, and besides these, a color-toning agent, etc. may be added if necessary, which are additives for improving and expanding the effect of processing.

Also, the above stabilizing solution for negative may be partitioned into two or more sections in order to elongate the counter-current pathway length similarly as the stabilizing solution as described above. The method for preparation of the replenisher and the replenished amount may be the same as in the case of the above stabilizing solution.

The stabilizing treatment carried out in this invention by using the washing-substitutive stabilizing solution is not the conventional processing in which a large quantity of running water is used to wash away the processing solution of a previous stage that has been adhered to or impregnated into a light-sensitive photographic material. Here, the processing functions equaly or superior to the above by making replenishment in the stabilizing solution in an amount of as small as 30 ml/m$^2$ to 9,000 ml/m$^2$, preferably 60 ml/m$^2$ to 3,000 ml/m$^2$, per unit area of the light-sensitive photographic material. Specifically, this refers to the process as described in Japanese Unexamined Patent Publication No. 134636/1983.

Accordingly, it is not required to provide a feeding/discharging pipe for the washing to the outside of the automatic processing machine as in conventional cases.

A stilbene type brightening agent may also be used in the color developing solution for color paper and the stabilizing solution.

Components contained in the waste liquor in the above color developing solution are the above various components or additives and the components or the like eluted from the photographic materials to be processed and thus accumulated.

Components contained in the waste liquor of the above bleach-fixing solution and stabilizing solution are the above various components or additives and the components or the like eluted from the photographic materials to be processed and thus accumulated.

The concentration-by-evaporation treatment apparatus of this invention can be effective when the waste liquor comprises the photographic process waste liquor and contains thiosulfate, sulfite and ammonium salt in large amounts, and particularly effective when it contains organic acid ferric complex salt and thiosulfate.

A preferred embodiment of this invention is to treat the photographic process waste liquor by effecting an electric treatment by supplying electric power to a charged substance existing in the photographic process waste liquor before or during evaporation treatment and generating an electric field. The apparatus for treating the photographic process waste liquor to which this embodiment is applied is basically of the types described in the sepcifications and drawings of Japanese Unexamined Patent Publication Nos. 118346/1987 to 118348/1987, 201442/1987 and 141692/1988, Japanese Patent Applications Nos. 69435/1987 to 69437/1987, etc. The device for generating an electric field is provided to these apparatuses.

The electric field to be generated in this embodiment is 10 volt/cm or less, preferably $10^{-6}$ to 5 volt/cm, more preferably $10^{-2}$ to 5 volt/cm. The charged substance to be used in this embodiment has a resistivity of 100 $\mu\Omega$cm or more, preferably 100 to $10^8$ $\mu\Omega$cm, more preferably 1,000 to $10^5$ $\mu\Omega$cm.

The heating means in this embodiment may be constituted such that conductive material is directly brought into contact with the photographic process waste liquor. Current is supplied to the photographic process waste liquor through the conductive material to effect heating. The conductive material is constituted by selecting at least one composition from a single crystal Si, polycrystal Si, $Ta_2N$, Ta-SiO_2, ZrN, TiN, Cr-Si-O, SiC, SiC-Zr, SiC-Cr, SiC-Hf, SiC-Ti, SiC-Mo, SiC-W, SiC-Nb, SiC-Ta, SiC-La, B, B-Mo, B-La, B-Cr, B-Tr, B-Na, B-Ta, B-W, B-V, C, C-halogen, C-Si, C-Ge, C-H, Pt, Mo and Mo-Si. The electro-conductive material can inhibit the generation of odor normally generated during concentration by evaporation by use of a catalytic action and the effect of current, etc. Also, the precipitate settled by concentration by evaporation is plastically changed to those having no viscosity and thus taken out easily.

In this instance, the treated composition may be pulverized and utilized as an adsorbent.

The effect of this invention was further improved by, in parallel with the above method for applying an electric field, an electric treatment by providing charged substances charged in minus or plus to the photographic process waste liquor before or during concentration by evaporation, or an electric treatment by being brought into contact with the charged substances.

Another preferable embodiment of this invention is to provide a means for illuminating far infrared rays on the photographic process waste liquor. The far infrared rays generating means may include, as those generating strong rays, Glovar, Nernst glower (lamp), a quartz mercury lamp, a platinum ribbon, etc. in which current is supplied to heat them. These means can generate electromagnetic waves having wavelength of 5 $\mu$ to 1 mm.

The above Glober comprises a sintered carbon silicate SiC and usually have a lod-like shape, but may be of any shape. The temperature of Glober raises to 1,100 to 1,500 K with 6 to 10 A and 200 to 300 W to generate far infrared rays. Nernst glower is prepared by kneading $ZnO_2$, as a main component, and oxides of yttrium, thorium and the like and molding into, for exmple, a lod-like shape having a length of 3 cm and a diameter of 1 to 3 mm, followed by baking at a high temperature.

In this embodiment, the far infrared rays generating means illuminates directly far infrared rays on the photographic process waste liquor. The wavelength thereof should preferably be 5 $\mu$ to 1 mm, more preferably 20 $\mu$ to 250 $\mu$. Also, the output of the far infrared rays generating means to be used should preferably be 10 W to 100 kW, more preferably 20 W to 10 kW. The wavelength and output of this means is set depending on the portion on which the far infrared rays generating means is provided and a temperature, concentration or the like of the photographic process waste liquor, as desired. References may be made by "Sensor Handbook" (Kabushiki Kaisha Baifukan, published on May 30, 1986 as the first edition, pp. 263 to 277) in which a method for measuring far infrared rays by use of photoelectric effect type. The far infrared rays generating means may preferably be provided such that it is wholly dipped in the photographic process waste liquor, more preferably partially dipped. Furtehr, this means may be arranged such that far infrared rays are illuminated on the surface of the photographic process waste liquor or to vapor generated without being dipped. The far infrared rays generating means can remarkably decrease an ammonia gas amount existing in vapor genegrated by concentration by evaporation, and can remarkably decrease the generation of sulfur series odor generated with the progress of concentration.

Further preferable embodiment of this invention is to provide an ultrasonic wave generating means for radiating ultrasonic wave to the photographic process waste liquor and/or vapor generated by evaporation.

The ultrasonic wave generating means of this embodiment is not particularly limited, but should preferably use an oscillator for obtaining ultrasonic wave easily. The oscillator may include an electroacoustic transducer, a piezoelectric oscillator, a ceramic oscillator, a magnetostrictive oscillator, etc. The piezoelectric oscillator may include oscillators of crystals, and in addition to crystals, piezoelectric materials such as ADP, KDP and Rochelle salt, and further oscillators utilizing piezoelectric effect of lithium niobate and polymeric materials. The ceramic oscillators may include barium titanate series solid solution porcelin containing barium titanate, calcium or calcium and lead, solid solution of lead zirconate titanate (PZT porcelin), three-component system porcelin comprising $Pb(Zr, Ti)O_3$ composition added with $Pb$-$(Mg_{1/3}Nb_{2/3})O_3$ as the third component. The magnetstrictive oscillator may include nickel, nickel alloys (containing chromium), iron-cobalt alloys, alferro alloys, Ni-Cu series and Ni-Cu-Co series ferrites, etc. As the detailed properties and method for preparation of these oscillators, references can be made by "Ultrasonic wave Engineering -Theory and Practice-" (Kabushiki Kaisha Kogyo Chosakai, published by Masanori Shimakawa on June 30, 1975 as the first edition), "Ultrasonic Wave Transducer" (published by Trikeps, on April 10, 1980) and further "Manual of Ultrasonic Wave Technique" (published by Nikkan Kogyo Shinbunsha on October 31, 1966 as the revised edition).

The ultrasonic wave generating means, which irradiates ultrasonic wave to the photographic process waste liquor and/or vapor generated by evaporation, has a frequency of preferably 10 KHz to 100 MHz, more preferably 500 KHz to 10 MHz. The frequency is determined by a portion on which the ultrasonic wave generating means is provided and a temperature and a concentration of the photographic process waste liquor, as desired. The strength of the ultrasonic wave is preferably 1 to 300 dB, more preferably 2 to 200 dB.

A method for measuring ultrasonic wave is described in the above documents, and further described in "Sensor Handbook" (Kabushiki Kaisha Baifukan, published on May 30, 1986, pp. 327 to 364) as the passive method, the active method, etc.

The ultrasonic wave generating means may be provided in the photographic process waste liquor, preferably at a bottom portion of the evaporating means for evaporating the photographic process waste liquor. The ultrasonic wave can decrease an ammonia gas amount existing in the vapor generated by concentration by evaporation, and can decrease the generation of sulfur series odor generated with the progress of concentration.

Also, the ultrasonic wave genarating means may be constituted such that ultrasonic wave is radiated to the vapor. Further, in the case where the evaporating means which stores the photographic process waste liquor comprises a synthetic resin vessel, etc., the ultrasonic wave generating means may be provided at the bottom portion outside of the evaporating means to provide the energy of the ultrasonic wave directly to the photographic process waste liquor stored in the evaporating means.

In this case, a heater used as the heating means can be used adsorbent by pulverization. Also, the heating means may preferably serve as the ultrasonic wave generating means to miniaturize the apparatus of this invention, because a single device has both functions of heating the photographic process waste liquor and generating ultrasonic wave. Further, the above heater should preferably generate ultrasonic wave. For example, a method in which the heater and the oscillator are integrated or a method in which an electric resistant materil to be used as the oscillator is used as the heater, etc. can be employed. In this instance, when the resistant material is made in a coil shape, ultrasonic wave, magnetic field and heat can be provided to the photographic process waste liquor, and thereby the generation of ammonia gas and hydrogen sulfide can be inhibited. If the heater is made of ultrasonic wave generating material and, for example, a large current of 100 V and 5 A is applied thereto, the resistant material generates heat and the oscillator generates ultrasonic wave. The heat value at this time is 100 W to 100 kW, preferably 200 W to 10 kW, more preferably 0.5 kW to 2 kW.

As a preferred example of applying this invention, this invention is suited for an instance in which the photographic process waste liquor produced with the development processing of light-sensitive photographic materials by use of an automatic processing machine is treated inside the automatic processing machine or in the vicinity thereof. The automatic processing machine will be described here.

## Automatic processing machine

In Fig. 1, the automatic processing machine is denoted by the numeral 100. The automatic processing machine shown therein is of a system in which a rolled light-sensitive photographic material F is continuously guided to a color developing tank CD, a bleach-fixing tank BF and a stabilizing tank Sb to effect photographic processing, and rolled up after drying D. The numeral 101 denotes replenishing solution tanks. The photographic processing amount of the light-sensitive photographic material F is detected by a sensor 102, and replenishing solutions are supplied in the respective processing tanks through a controlling device 103 according to the detected information.

Once the replenishing solutions are supplied to the respective photographic proceesing tank, overflowed waste liquor is discharged from the processing tanks and collected in a stock tank 104. As a means for moving the overflowed photographic process waste liquor to the stock tank 104, a simple method is to allow it to naturally drop through a guide tube. In some instance, it can be forcedly transported by means of a pump or the like.

Also, as described above, components are different in the photographic process waste liquor in each of the photographic processing tanks CD, BF and Sb, but it is preferred to carry out the treatment at one time by mixing all the photographic process waste liquors.

In Fig. 2, a receptacle box 73 is connected to the bottom section of the evaporation vessel 1. In the receptacle box 73, a filter 74 is provided such that the precipitate is forcedly aspitated by a circulating pump 75. The waste liquor is filtrated by the filter 74, and thereby the precipitates with low water content is filtrated off. In this instance, the viscosity of the precipitate has been lowered and thus the precipitate is filtrated off without clogging to alleviate burden of the filter 74.

Fig. 3 shows an example in which a filter 74 is provided inside a cylindrical case 76 and a circulating pump 75 is connected to the upper section of the evaporation vessel 1.

In Fig. 4, a filter 74 is provided inside the box-type case 77 and a circulating pump 75 is connected to the lower portion of the evaporation vessel 1. Fig. 5 is a partial enlarged view of Fig. 4. The filter 74 is made of spongy material or liner material.

In Fig. 6, a centrifugal separator 78 is provided at the lower portion of the evaporation vessel 1 such that a precipitate is removed thereby. In Fig. 7, a box 79 is provided at the lower portion of the evaporation vessel 1, the upper portion of the box 79 is connected to the precipitate taking-out port of the evaporation vessel 1. On the other hand, the evaporation vessel 1 and the box 79 are connected each other through the filter 74 and a circulating pump 75.

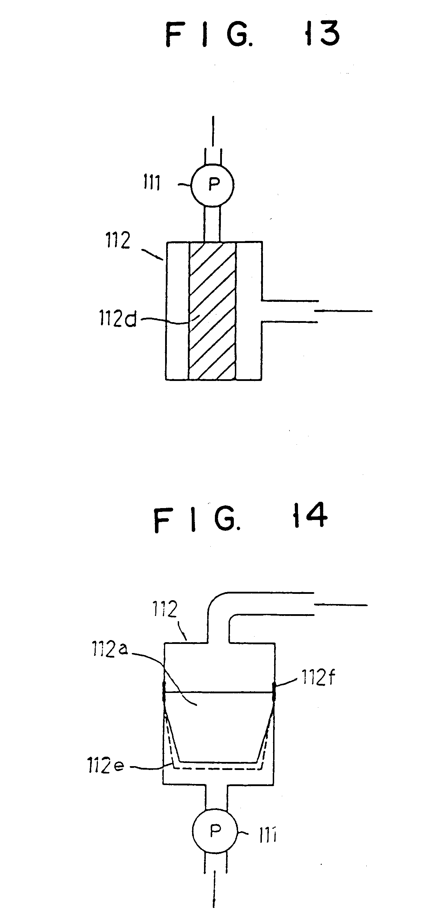

The evaporation vessel 1 shown in Fig. 13 is provided with a magnetic field generating means 70 which serves also as the heater in the photographic process waste liquor. In this instance, no magnetic field is generated by using a commercial current source of 100 V and 50 or 60 cycles, accordingly it is necessary to change alternating current to direct current to have a desired voltage and current. The evaporation vessel 1 is open to the air through an incinerated catalyst 89 and an adsorption column 90 to prevent odors such as ammonia gas and hydrogen sulfide gas from leaking outside.

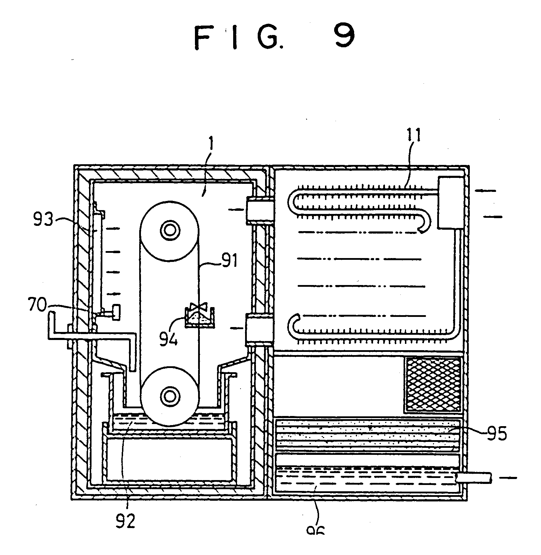

The evaporation vessel 1 shown in Fig. 9 is provided with a belt 91 so that it carrys upward the photographic process waste liquor in the stored liquid tank 92. A heater 93 is provided in the evaporating means 1 at the position being opposite to the belt 93 to heat the photographic process waste liquor adhered to the belt 91. The photographic process waste liquor is thereby concentrated by evaporation, and the condensate is collected to a receptacle 94. At this time, the evaporated vapor is condensed in a condensing means 11, and the condensate liquid is stored in a tank 96 through a filter 95. The magnetic field generating means 70 is provided in the vicinity of the heater 93 so that the photographic process waste liquor on the belt 93 can be passsed through the magnetic field.

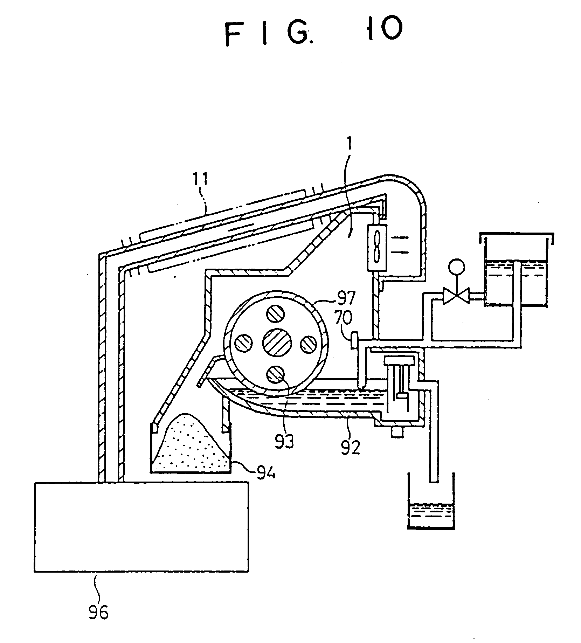

In Fig. 10, a rotary drum 97 is provided in the evaporation vessel 1 so that the photographic process waste liquor in the stored liquid tank 92 is carried upward by the rotation of the drum 97. Further, a heater 93 is provided in the ratary drum 97. The photographic process waste liquor is heated by means of the heater 93 through the rotary drum 97, and the condensate thus produced is discharged into the receptacle box 94 and the vapor is stored in the tank 96 through the condensing means 11. The magnetic field generating means is provided at the position being opposite to the rotary drum 97 and the photographic process waste liquor on the rotary dorum is passed through the magnetic field as described above.

In the drawing, the numeral 1 denotes an evaporation vessel as an evaporating means, composed of a cylindrical upper section 1a having a larger diameter and a cylindrical lower section 1b having a smaller diameter, and provided at an upper section 1a is a heating means 2. The heating means 2 is provided so that it is dipped in the photographic process waste liquor, to heat the photographic process waste liquor to effect the concentration-by-evaporation treatment with a heat-applying capacity of 20 $W/cm^2$ or less. The lower section 1b and the upper section 1a of the evaporation vessel 1 are also connected by means of a circulation system 110. The circulation system 110 is provided with a pump 111 and a precipitate separating means 112 such that the precipitate is taken out form the lower section of the evaporation vessel 1 by the actuation of the pump 111. In the precipitate separating means 112, denser precipitate is separated and then discharged, and the residual liquid by the separation is recovered to the upper section 1a of the evaporation vessel 1.

The precipitate separating means 112 is composed of a filter bag 112a. The filter bag 112a is mounted to a receptacle 112c through, for example, a net 112b with the opening of 2 mm. When the precipitate is stored in the filter bag 112c to a predetermined amount, a valve 113 is closed to stop the condensate liquid and the filter bag 112a is changed. The separated liquid stored in the receptacle 112c is recovered to the evaporation vessel 1 by the actuation of the pump 71 arranged at the posterior step.

Further, a liquid level sensor 4 and a vapor discharging pipe 9 are provided at the upper section 1a of the evaporation vessel 1. The vapor discharging pipe 9 is connected to a stored liquid lead-in pipe 12 through the heat exchanger 10 and the condensing means 11.

In the condensing means 11, the vapor discharging pipe 9 is provided with a large number of dissipation plates for cooling 13 and further provided with a liquid level sensor 14. A cooling water lead-in pipe is provided below the condensing means 11 and is connected to a shower pipe 17 having a large number of pours through a pump 16.

The air in the condensing means 11 is released outside the treatment apparatus by a fan for cooling 18. The stored liquid lied-in pipe 12 is connected to the stored liquid tank 19 through an activated charcoal column 120. Further, an activated charcoal cartridge 21 packed with an activated charcoal is provided above the stored liquid tank 19 to prevent the bad odor from leaking outside. The stired liquid tank 19 is provided with an air lead-in pipe 22 whose terminal end section 23a is introduced in the waste liquor in the evaporation vessel 1 through the air pump 23. The numeral 24 denotes a waste water feeding tank which is provided with a waste liquor lead-in pipe 25 connected to the upper section 1a of the evaporation vessel 1 through a bellows pump 26 and a heat exchanger 10. The waste liquor feeding tank 24 is further provided with a liquid level sensor 27.

On the upper section 1a of the evaporation vessel 1, provided are a temperature sensor 30 and a guide pipe 28 which is connected to the waste liquor feeding tank 24 through a plunger disk 29.

Next, the process for carrying out the heating and evaporation treatment will be schematically described below.

About 20 lit. of overflow liquid from the automatic processing machine is stored in the waste liquor feeding tank 24. The activated charcoal cartridge 21, the stored liquid lead-in pipe 12 and an air lead-in pipe 22 are connected to the stored liquid tank 19. After feeding water into the condensing means 11, the apparatus is switched on, and the air pump 23 is actuated and also the air in the sotred liquid tank 19 is led into the evaporation vessel 1 through the air lead-in pipe 22.

Next, the cooling fan 18, cooling water circulating pump 16 are actuated in this order, whereby the sored water is circulated in such a way that it is fed on the shower pipe 17 or on the heat dissipation plates 13 of the vapor discharging pipe 9 kept in the condensing means 11 through the cooling water lead-in pipe 15, and again stored at the lower part of the condensing means 11. Subsequently, the bellows pump 26 is actuated, and the waste liquor in the waste liquor feeding tank 24 passes the heat exchanger 10 through the waste liquor lead-in pipe 25, thereafter being fed into the evaporation vessel 1. The quantity of the waste liquor in the evaporation vessel 1 increases and, once the liquid level is detected by the liquid level sensor 4 for more than, for example, 3 seconds, the bellows pump 26 stops working and at the same time the heating means 2 is switched on, so that the evaporation by heating is started.

The photographic process waste liquor is concentrated by evaporation by heating and evaporating. The precipitate produced by the treatment is taken out from the lower section 1b of the evaporation vessel 1 by the actuation of the pump 111 and conveyed to the precipitate separating means 112, where the precipitate is separated as the further denser precipitate and discharged. The remaining water content is recovered to the upper section 1a of the evaporation vessel 1. In this treatment, such a circulation causes convection in the photographic process waste liquor and thereby precipitate does not stay in the vicinity of the heating means 2. Accordingly, in the concentration-by-evaporation treatment by use of the heating means 2, thermal decomposition of the precipitate can be prevented, odor gas can also be decreased to a great extent, and the generation of hydrogen sulfide and surfur series ofor can be alleviated even if the concentration proceeds. As described above, the precipitate produced by concentration by evaporation is separated and then discharged, and whereby sulfur series odor in the condensate liquid produced by concentration by evaporation can be effectively prevented to make it possible to remarkably decrease the iodine consumption amount.

The concentration by evaporation decreases the liquid quantity of the waste liquor in the evaporation vessel 1 to lower the liquid level. Once the liquid level turns not to be detected by the liquid level sensor 4, for example, for more than 3 seconds, the bellows pump 26 is again switched on, and the waste liquor in the waste liquor feeding tank 24 is fed into the evaporation vessel 1. This operation is repeated.

The vapor formed by evaporation passes the vapor discharging pipe 9, and, after heat exchange with the waste liquor in the heat exchanger 10, it is condensed through the condensing means 11, so that a part thereof is condensed to condensate liquid. The condensate liquid passes the stored water lead-in pipe 12, passes through the activated charcoal cartridge 120 so that the ill-smelling odor is adsorbed and removed and enters into the stored liquid tank 19, and then the condensate liquid is released from the terminal end 12a under the stored liquid surface and thereafter stored in the stored liquid tank 19. In this instance, the gas released under the stored liquid surface rises in the stored liquid to carry out the bubbling, and the gas such as hydrogen sulfate dissolving in the stored liquid is removed from the liquid and the gas is recovered from the stored tank 19 to the photographic process waste liquor positioned in the lower part of the evaporation vessel 1 by the actuation of the air pump 23.

Once the liquid level sensor 27 detects that the waste liquor in the waste liquor feeding tank 24 ran short, the bellows pump 26 stops working, the heating means 2 is switched off, the cooling water circulating pump 16 and the fan for cooling 18 are stopped after 2 hours, a lamp is turned on and a buzzer also sounds to notify that the concentration-by-evaporation treatment has been completed, and at the same time the air pump 23 stops.

Also, when the liquid level sensor 14 detects that the stored water in the condensing means 11 ran short in the course of the concentration by evaporation, a lamp is turned on and a buzzer also sounds to notify that the stored water ran short.

Similarly, in the course of the concentration by evaporation, when the temperature sensor 30 detects that the temperature in the evaporation vessel raised to 120°C because of an extraordinary lowering of the liquid level for any reason, causing the liquid-empty heating, a lamp is turned on and a buzzer also sounds, and at the same time the heating means is switched off. Then, the concentration-by-evaporation treatment is discontinued by a series of the motions as described above.

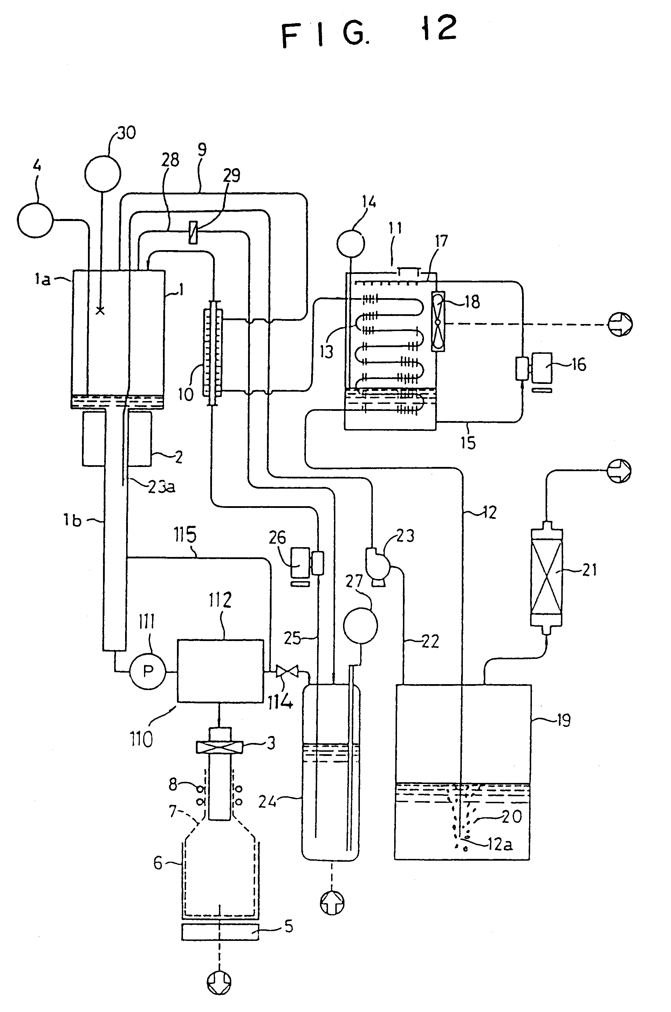

In Fig. 12, a circulating system 110 is provided with the waste liquor-feeding tank 24, the remaining water content separated in the precipitate separating means 112 is fed to the waste liquor-feeding tank 24 and mixed with the photographic process waste liquor to be fed to the evaporation vessel 1. Further, in this apparatus the heating means 2 is provided on the periphery outside of the lower section 1b of the evaporation vessel 1 so that the precipitate does not remain at the lower section 1b of the evaporation vessel 1. A sludge receptacle 6 is mounted on a pedestal 5 below the precipitate separating means 112, a polypropylene bag 7 is fixed in the sludge receptacle 6 by means of o-rings 8, and the separated precipitate is discharged by openig the valve 3.

The precipitate separating means 112 is connected to the waste liquor-feeding tank 24 through a valve 114. The valve 114 is closed during operation. The remaining water content separated by means of the precipitate separating means 112 is recovered to the lower section 1b of the evaporation vessel 1 through a pipe 115. When the precipitate is taken out from the precipitate separatine means 112, the photographic process waste liquor in the evaporation vessel 1 is recovered to the waste liquor-feeding tank 24 by opening the valve 114, and then the precipitate is discharged from the precipitate separating means 112 by opening the ball valve 3.

Figs. 13 to 15 denote further embodiments of the precipitate separating means 112. In Fig. 23, a cylindrical filter 112d is employed. In Fig. 24, a filter bag 112a is provided to a net-like pedestal 112e having a large opening. The filter bag 112a is removable by means of fitment 112f. In Fig. 25, a lower container 112g and an upper container 112h are connected at a connecting section 112i, the upper container 112h is provided with a filter 112j such that the precipitate is taken out to the lower container 112g. When the precipitate is taken out, the pump 117 is actuated to remove the remaining liquid in the lower container 112 g.

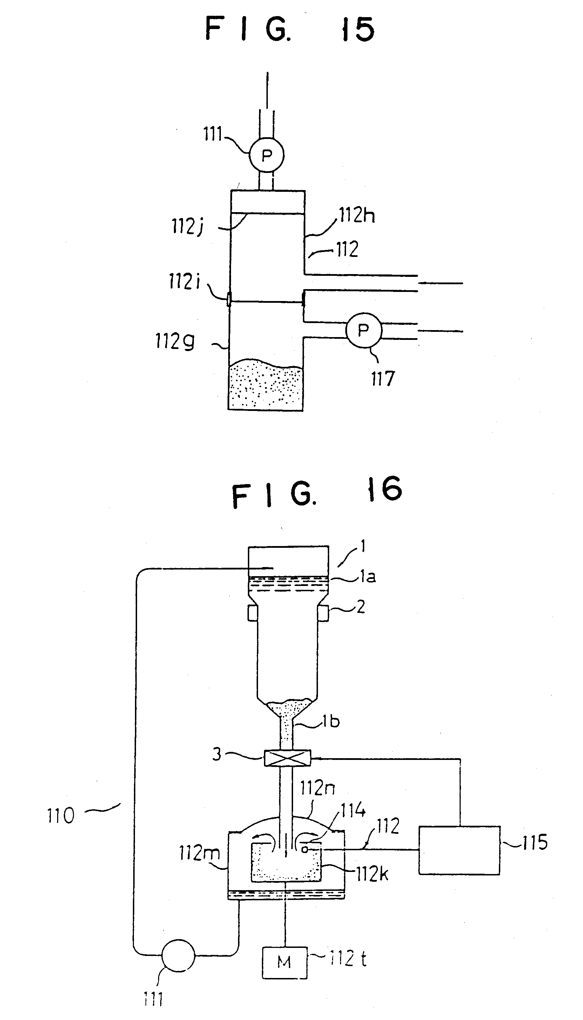

Figs. 16 to 20 denote further embodiments of the precipitate separating means 112. In each drawing, the precipitate separating means 112 is composed of a centrifugal filtrating means.

In Fig. 16, a centrifugal filtrating means is provided as the precipitate separating means 112 at the lower section 1b of the evaporation vessel 1 through the valve 3. The precipitate is fed into the centrifugal housing 112k. The centrifugal housing 112k is rotated by means of a motor 112r, then the precipitate and water are separated by centrifugal force, subsequently the water is flowed outside the centrifugal housing 112k to gather in the container 112m, the gathered water is recovered to the evaporation vessel 1 by the actuation of the pump 111.

In the centrifugal separating treatment, a liquid detecting means 114 detects the concentration-by-evaporation liquid in the centrifugal housing 112k, when the liquid detecting means 112k detects that the liquid ran short, predetermined amount of the concentration-by-evaporation liquid is fed by opening the valve 3 by use of a cotrolling device 115, and the centrifugal separation treatment is repeated.

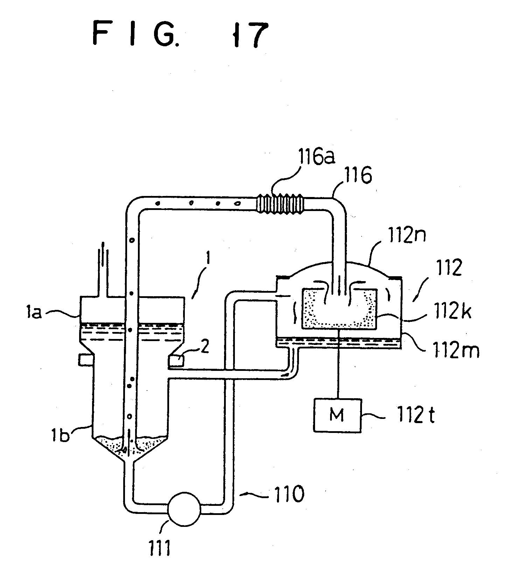

In Fig. 17, a centrifugal separation means which is the precipitate separating means 112 is provided at the portion upper than the evaporation vessel 1, and the air in the container 112m is fed to the bottom section of the evaporation vessel 1 by use of the pump 111. The concentration-by-evaporation liquid in the evaporation vessel 1 is fed to the centrifugal housig 112k through a pipe 116 which passes through a lid 112n of the container 112m. Accordingly, for facilitating the opening and closing of the lid 112n when the precipitate is taken out from the centrifugal housing 112k, a bellows section is formed in the pipe 116. Also, the separated water to be stored in the container 112 m is recovered to the evaporation vessel 1.

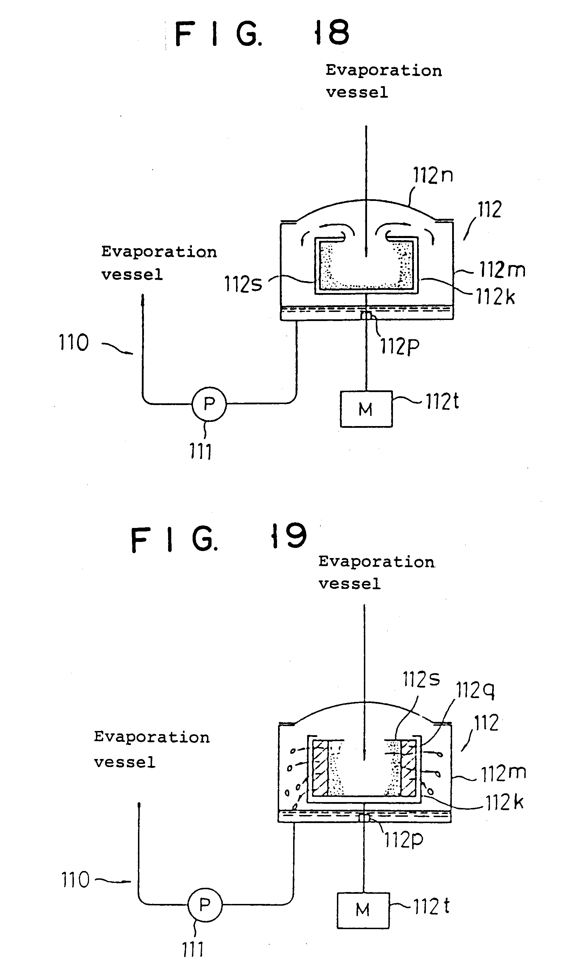

Figs. 18 to 20 denote further specific examples of the centrifugal separation means of Figs. 26 and 27. In Fig. 28, a precipitate taking-out case 112s is fixed in the centrifugal housing 112k by means of engagement, thread-mount, etc. so that it is rotatable with the centrifugal housing 112k. To the centrifugal housing, an output shaft of a motor 112t passing through the container is fixed, and it is rotated by means of the motor 112t. The portion on which the output shaft of the motor 112t passed through is sealed by means of a sealing material 112p.

The material of the container 112m and the centrifugal housing 112k may be any material of heat resistant property, for example, heat resistant glass, titanium, stainless, carbon steel, heat resistant plastics, etc., but preferably be of stainless (preferably SUS 304 and SUS 316, particularly preferably SUS 316) and titanium from the viewpoint of safety and anticorrosion property. Also, the rotating ratio of the motor 112 is in the range of, for example, 1 to 100,000 rpm, but should be set depending on the treating amount, treating ratio, etc., preferably 10 to 10,000rpm, particularly preferably 50 to 3,000 rpm.

The concentration-by-evaporation liquid is fed from the lower section 1b of the evaporation vessel 1 into the precipitate taking-out case 112s in the centrifugal housing 112k. Here, the precipitate is collected to the peripheral portion outside the precipitate taking-out case 112s and the water to the center portion thereof by teh centrifugal force due to rotation with the centrifugal housing 112k. The separated water is overflowed from the upper opening portion of the centrifugal housing 112k into the container 112m. The water in the container 112m is recovered to the evaporation vessel 1 by the pump 111. this treatment is repeated and the precipitate which is removed water content remains in the precipitate taking-out case 112s.

When the predetermined amount of the precipitate is stored in the precipitate taking-out case 112s, the torque of the motor 112t which rotates the centrifugal housing 112k increases, the torque is detected by means of the torque detecting means (not shown in the drawing), the valve is closed by means of the controlling device 115 shown in Fig. 16 to stop the treatment. In this case, in the apparatus shown in Fig. 18, the pump 111 is stopped. Consequently, the precipitate taking-out case 112s in the centrifugal housig 112k is taken out to dispose the precipitate. The precipitate taking-out case 112s is made of, for example, deformable material and is removable from the centrifugal case 112s. The precipitate taking-out case 112s may be a bag made of resin. Also, the precipitate in the precipitate taking-out case 112s may be detected by means of an optical sensor. In the device shown in Fig. 29, the sensor detects liquid overflowed from the upper portion of the precipitate taking-out case 112s. In this case, similarly as in the above, the valve 3 is closed by means of the controlling device 115 and, in the device shown in Fig. 18, the pump 111 is stopped.

Fig. 19 shows a precipitate taking-out case 112s having a filter 112q inside a centrifugal housing 112k. By the rotation of the precipitate taking-out case 112s, the water content is filtrated off by centrifugal force to be discharged into the container 112m. In this case, similarly as in the above, the operation is stopped by detecting that the predetermined amount of the precipitate is stored in the precipitate taking-out case 112s. The detection of storage of the predetermined amount of the precipitate may be carried out by detecting that water is overflowed from the center portion of the precipitate taking-out case 112s.

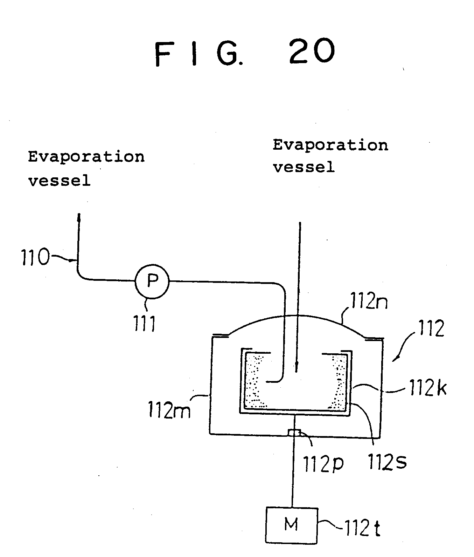

In Fig. 20, the precipitate taking-out case 112s as shown in Fig. 18 is provided inside the centrifugal housing 112k such that the water is taken out to the precipitate taking-out case 112s. The water filtrated by the centrifugal force is recovered to the evaporation vessel 1. In Figs. 28 to 30, the precipitate in the evaporation vessel 1 is fed from the lid 112n of the container 112m. The feeding pipe may preferably be made of flexible resin for making it possible to open the lid 112n to take out the precipitate taking-out case 112s without releasing the feeding pipe. Also, in stead of connecting the feeding pipe to the lid 112n, the feeding pipe may be made to pass through the container 112m to feed the precipitate into the precipitate taking-out case 112s.

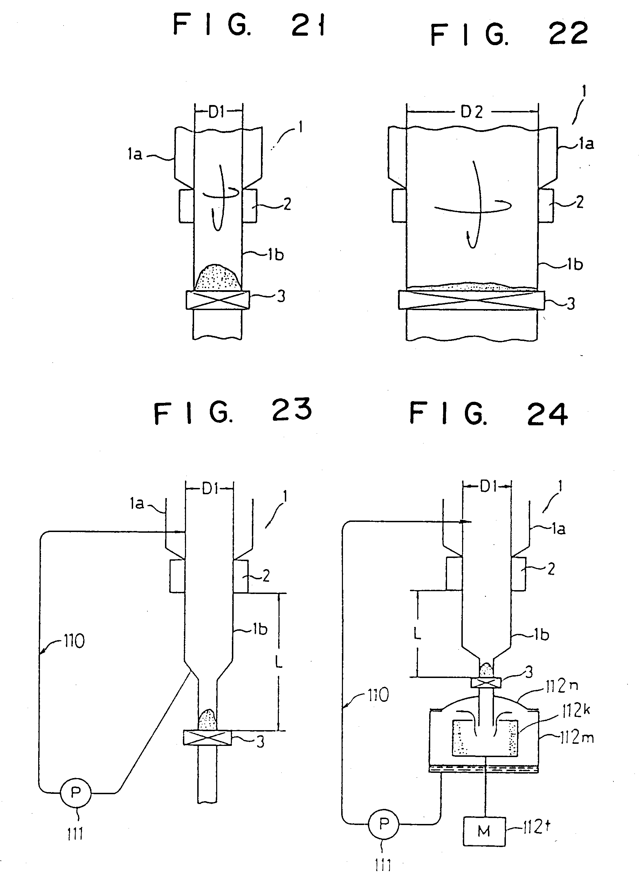

Figs. 21 to 24 show other embodiments of the means for accelerating the convection of the photographic process waste liquor.

Figs. 21 and 22 show the embodiments in which the spacings of the heating means 2 in the evaporation vessel 1 are different each other. In Fig. 21, the lower section 1b of the evaporation vessel 1 is made to have a smaller diameter and thereby the spacing D1 between the heating means 2 narrower. In Fig. 22, the lower section 1b of the evaporation vessel 1 is made to have a larger diameter and thereby the spacing D2 between the heating means 2 wider. Among them, preferred is the apparatus shown in Fig. 22 in which the spacing of the heating means 2 arranged is wider, because the convection in the photographic process waste liquor is liable to occur in the horizontal direction, in addition to the vertical direction.

In Figs. 23 and 24, the convection in the photographic process waste liquor is made to be liable to occur in the vertical direction by making longer the spacing L between the heating means 2 and the valve 3 in the evaporation vessel 1. Further, in Fig. 23, the circulation of the photographic process waste liquor is carried out by the circulating system on the part upper than the valve 3, and thereby alleviate the circulation of the precipitate stored on the valve 3. Also, in Fig. 24, the spacing L between the heating means 2 and the valve 3 is made to be shorter, and further the photographic process waste liquor is circulated through the centrifugal filtrating means as shown in Fig. 26.

[Experimental examples]

After imagewise printing on a commercially available color photographic paper (produced by Konica Corporation) by means of an automatic processing machine RP-800 (produced by Konica Corporation) for NPS processing system paper, continuous processing was carried out with use of the following processing steps and processing solutions.

| Standard processing steps: | | |
|---|---|---|
| (1) Color developing | 40°C | 3 min. |
| (2) Bleach-fixing | 38°C | 1 min. 30 sec. |
| (3) Stabilizing | 25°C to 35°C | 3 min. |
| (4) Drying | 75°C to 100°C | about 2 min. |

| Composition of processing solutions: | |
|---|---|
| [Color developing tank solution] | |
| Ethylene glycol | 15 ml |
| Potassium sulfite | 2.0 g |
| Potassium bromide | 1.3 g |
| Sodium chloride | 0.2 g |
| Potassium carbonate | 24.0 g |
| 3-Methyl-4-amino-N-ethyl-N-($\beta$-methanesulfonamidoethyl)aniline sulfate | 5.5 g |
| Brightening agent (a 4,4'-diaminostilbenedisulfonic acid derivative) | 1.0 g |
| Hydroxylamine sulfate | 3.0 g |
| 1-Hydroxyethylidene-1,1-diphosphonic acid | 0.4 g |
| Hydroxyethyliminodiacetic acid | 5.0 g |
| Magnesium chloride·hexahydrate | 0.7 g |
| Disodium 1,2-dihydroxybenzene-3,5-disulfonate | 0.2 g |
| Made up to 1 liter by adding water, and adjusted to pH 10.20 using potassium hydroxide and sulfuric acid. | |

| [Color developing replenishing solution] | |
|---|---|
| Ethylene glycol | 20 ml |
| Potassium sulfite | 3.0 g |
| Potassium carbonate | 24.0 g |
| Hydroxylamine sulfate | 4.0 g |
| 3-Methyl-4-amino-N-ethyl-N-($\beta$-methanesulfonamidoethyl)aniline sulfate | 7.5 g |
| Brightening agent (a 4,4'-diaminostilbenedisulfonic acid derivative) | 2.5 g |
| 1-Hydroxyethylidene-1,1-diphosphonic acid | 0.5 g |
| Hydroxyethyliminodiacetic acid | 5.0 g |
| Magnesium chloride·hexahydrate | 0.8 g |
| Disodium 1,2-dihydroxybenzene-3,5-disulfonate | 0.3 g |
| Made up to 1 liter by adding water, and adjusted to pH 10.70 using potassium hydroxide and sulfuric acid. | |

| [Bleach-fixing tank solution] | |
|---|---|
| Ethylenediaminetetraacetic acid ferric ammonium dihydrate<br>Ethylenediaminetetraacetic acid<br>Ammonium thiosulfate (a 70 % solution)<br>Ammonium sulfite (a 40 % solution) | 60.0 g<br>3.0 g<br>100 ml<br>27.5 ml |
| Made up to 1 liter as a whole by adding water, and adjusted to pH 7.1 using potassium carbonate or glacial acetic acid. | |

| [Bleach-fixing replenishing solution A] | |
|---|---|
| Ethylenediaminetetraacetic acid ferric ammonium dihydrate<br>Potassium carbonate | 260.0 g<br>42.0 g |
| Made up to 1 liter as a whole by adding water.<br>The pH of this solution is adjusted to 6.7 ± 0.1 with use of acetic acid or ammonia water. | |

| [Bleach-fixing replenishing solution B] | |
|---|---|
| Ammonium thiosulfate (a 70 % solution)<br>Ammonium sulfite (a 40 % solution)<br>Ethylenediaminetetraacetic acid<br>Glacial acetic acid. | 250.0 ml<br>25.0 ml<br>17.0 g<br>85.0 ml |
| Made up to 1 liter as a whole by adding water.<br>The pH of this solution is adjusted to 5.3 ± 0.1 with use of acetic acid or ammonia water. | |

| [Washing-substitutive stabilizing tank solution and replenishing solution] | |
|---|---|
| Ethylene glycol<br>2-Methyl-4-isothiazolin-3-on<br>1-Hydroxyethylidene-1,1-diphosphonic acid (a 60 % solution)<br>Ammonia water (a 25 % aqueous solution of ammonium hydroxide) | 1.0 g<br>0.20 g<br>1.0 g<br>2.0 g |
| Made up to 1 liter by adding water, and adjusted to pH 7.0 using 50 % sulfuric acid. | |

An automatic processing machine was filled in the tanks with the above color developing tank solution, bleach-fixing tank solution and stabilizing tank solution to carry out a running test while processing a sample of the above commercially available color photographic paper and while replenishing the above color developing replenishing solution, bleach-fixing replenishing solutions A and B and stabilizing replenishing solution through a bellows pump. The amount for replenishing was such that the color developing tank was replenished in an amount of 190 ml, the bleach-fixing tank was replenished in an amount of 50 ml for each of the bleach-fixing replenishing solutions A and B, and the stabilizing tank was replenished with the washing-substitutive stabilizing replenishing solution in an amount of 250 ml, each per 1 $m^2$ of the color paper. The stabilizing tank in the automatic processing machine was comprised of stabilizing tanks comprising a first to third tanks in the direction of the flow of the sample, wherein the replenishing was carried out from the last tank, the solution overflowed from the last tank was flowed into the tank anterior thereto and further the solution overflowed therefrom was flowed into the tank further anterior thereto, taking the multi-tank counter-current system.

The continuous processing was carried out until the total replenishing amount of the washing-substitutive stabilizing solution reaches 3 times of the capacity of the stabilizing tank.

Next, after color negative films GX-100 (Trade name; produced by Konica Corporation) were subjected to exposure according to a conventional method, continuous treatment was carried out under the following processing conditions by use of the automatic processing machine which is a remodel of a negative film processor NPS-FP 34 (produced by Konica Corporation).

| Processing steps | Time (hours, minutes) | Temperature (°C) | Tank capacity (lit.) | Replenished amount (ml/dm$^2$) |
|---|---|---|---|---|
| Color developing | 3'15" | 38 ± 0.3 | 18 | 15 |
| 1st bleach-fixing tank | 2'00' | 38 ± 0.3 | 15 | - |
| 2nd bleach-fixing tank | 2'00' | 38 ± 0.3 | 15 | 10 |
| 1st no-water washing stabilizing tank | 1'00" | 38 ± 0.3 | 9 | - |
| 2nd no-water washing stabilizing tank | 1'00" | 38 ± 0.3 | 9 | 10 |
| Stabilizing | 40" | 38 ± 0.3 | 9 | 10 |
| Drying | 1'30" | 38 ± 0.3 | - | - |

From the 2nd no-water washing stabilizing tank to the 1st no-water washing stabilizing tank, the counter-current system (2-steps counter current) was employed. Similarly, from the 2nd bleach-fixing tank to the 1st bleach-fixing tank, the counter-current system was employed.

In each tank, the amount of replenishing solution carried from the anterior tank was 0.6 ml/dm$^2$.

The recipe of the solutions for tanks and respective replenishing solutions thereof are shown below.

| [Color developing tank solution] | |
|---|---|
| Potassium carbonate | 30 g |
| Sodium sulfite | 2.0 g |
| Hydroxylamine sulfate | 2.0 g |
| 1-Hydroxyethylidene-1,1-diphosphonic acid (60 % aqueous solution) | 1.0 g |
| Hydroxyethyliminodiacetic acid | 3.0 g |
| Magnesium chloride | 0.3 g |
| Potassium bromide | 1.2 g |
| Sodium hydroxide | 3.4 g |
| N-ethylene-N-$\beta$-hydroxyethyl-3-methyl-4-amino anilin chlorate | 4.6 g |
| Disodium 1,2-dihydroxybenzene-3,5-disulfonate | 0.2 g |
| Made up to 1 liter by adding water, and adjusted to pH 10.1 using sodium hydroxide. | |

| [Color developing replenishing solution] | |
|---|---|
| Porassium carbonate | 40 g |
| Sodium sulfite | 3.0 g |
| Hydroxylamine sulfate | 3.0 g |
| Diethylenetriamine·pentaacetic acid | 3.0 g |
| Potassium bromide | 0.9 g |
| Sodium hydroxide | 3.4 g |
| M-ethylene-N-$\beta$-hydroxyethyl-3-methyl-4-aminoanilin chlorate | 5.6 g |
| Made up to 1 liter by adding water, and adjusted to pH 10.1 using sodium hydroxide. | |

| [Bleach-fixing tank solution and its replenishing solution] | |
|---|---|
| Diethylenetriamine•pentaacetic acid ferric ammonium salt | 0.5 mol |
| Hydroxyethyliminodiacetic acid | 20 g |
| Ammonium thiosulfate (a 70 % wt/vol solution) | 250 ml |
| Ammonium sulfite | 15 g |
| 2-Amino-5-mercapto-1,3,4-thiadiazole | 1.0 g |
| Ammonia water (28 %) | 20 ml |
| Made up to 1 liter as a whole by adding water, and adjusted to pH 7.6 using acetic acid and ammonia water. | |

| [No water-washing stabilizing tank and its replenishing solution] | |
|---|---|
| 5-Chloro-2-methyl-4-isothiazoline-3-on | 0.01 g |
| 2-methyl-4-isothiazoline-3-on | 0.01 g |
| Ethylene glycol | 2.0 g |
| Diethylenetriamine•pentaacetic acid ferric ammonium salt | 0.03 mol |
| Made up to 1 liter by adding water. The pH of this solution is adjusted to 10.0 with use of ammonium and sulfuric acid. | |

| [Stabilizing tank solution and its replenishing solution] | |
|---|---|
| Formalin (37 % aqueous solution) | 3 ml |
| Konidax (produced by Konica Corporatin) | 7 ml |
| Made up to 1 liter by adding water. | |

Continuous treatment was conducted until the total replenishing amount of the color deveoping solution becomes 3 times of the volume of the color developing soluiton tank. The waste liquor used for the treatment of the color photographic paper and the waste liquor used for the above treatment of the color negative film were mixed in the ratio of 50 to 50 and used for the following Experiments 1 to 4.

[Experiment 1]

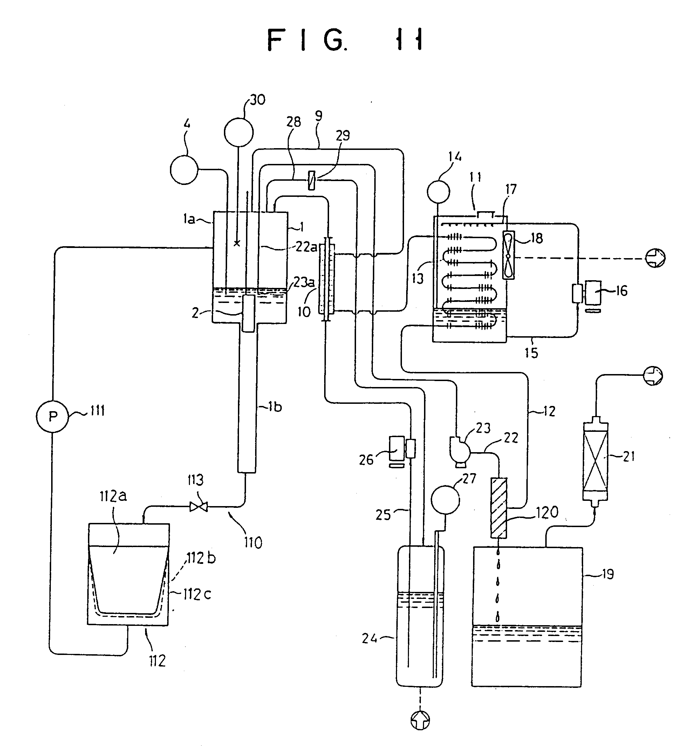

The following experiment was carried out by using the above mixed waste liquor by means of the apparatus of Fig. 11, for treating the photographic process waste liquor.

The opening pore size of the filter bag to be used was 20 $\mu$m. Comparative experiment was conducted by means of the above apparatus, for treating the photographic process waste liquor, which is not provided with the precipitate separating means. In this experiment, the heat-applying capacity of the heating means 2 was varied as noted in Table 1 to measure the iodine consumption amount (unit: ppm).

Table 1

| Heat-applying capacity (W/cm$^2$) | No precipitate-separating means (ppm) | Precipitate separating means with a filter of mesh 20 $\mu$m (ppm) |
|---|---|---|
| 0.5 | 350 | 150 |
| 1.5 | 350 | 150 |
| 2.0 | 350 | 150 |
| 5.0 | 350 | 160 |
| 10.0 | 350 | 160 |
| 15.0 | 360 | 200 |
| 20.0 | 360 | 250 |
| 25.0 | 360 | 320 |
| 35.0 | 360 | 350 |

[Experiment 2]

The iodine presumption amount was measured by means of the apparatus shown in Fig. 11, for treating the photographic process waste liquor, and by varying the pore size of the filter bag from 0,5 to 500 $\mu$m as shown in Table. 2, after one hour and 12 hours from starting of the operation. The results are also shown in Table. 2.

Table 2

| Filter mesh ($\mu$m) | After one hour from starting of the operation | After 12 hours from starting of the operation |
|---|---|---|
| 0.5 | 150 | 200 |
| 1.0 | 150 | 180 |
| 5 | 150 | 160 |
| 10 | 150 | 150 |
| 20 | 150 | 150 |
| 50 | 150 | 150 |
| 100 | 160 | 150 |
| 200 | 180 | 150 |
| 500 | 200 | 180 |

As will be clear from Table 2, the iodine presumption amount is preferably alleviated in the range of filter mesh of 1 to 200 $\mu$m.

[Experiment 3]

The concentration-by-evaporation treatment was carried out by using the apparatus used in Experiments 1 and 2 excepting that the heat-applying capacity was varied as noted in Table 3. This experiment was operated by setting the heater output of the heating means of the evaporation vessel to 2 kW to measure the $H_2S$ concentration. The results are shown in Table 3.

23

Table 3

| Heat-applying capacity of the heater (W/cm²) | No precipitate taking-out filter | Precipitate filter (100 to 200 μm) | Precipitate filter (10 μm) |
|---|---|---|---|
| 200 | 6,000 | 20 | 18 |
| 50 | 5,500 | 15 | 12 |
| 20 | 100 | 3 | 2.5 |
| 15 | 30 | 2 | 1.3 |
| 10 | 6 | 1 | 0.9 |
| 2 | 2 | 0.1 | 0.1 |
| 1 | 2 | 0.01 | 0.005 |
| 0.5 | 0.6 | 0.001 | 0.005 |

As will be clear from Table 3, the generation of $H_2S$ can be alleviated under the condition of the heat-applying capacity of 20 W/cm² or less. In this instance, preferred is those having the precipitate separating means. However, in the case where the heat-applying capacity is 0.5 W/cm² or less, the odor can be decreased without providing the precipitate separating means.

[Experiment 4]

The following experiments were carried out by means of the apparatus for treatment shown in Figs. 21 to 24, assuming them as Types A to D, by varying the heat-applying capacity of the heating means as noted in Table 4. The experiments were operated by setting the heater output of the heating means in the evaporation vessel to 2 kW to measure the $H_2S$ concentration in the vapor. The results are shown in Table 4.

Table 4

| Heat-applying capacity (W/cm²) | Type A | Type B | Type C | Type D |
|---|---|---|---|---|
| 100 | 5,800 | 6,000 | 6,000 | 30 |
| 20 | 100 | 50 | 50 | 10 |
| 15 | 40 | 10 | 10 | 3 |
| 10 | 10 | 3 | 3 | 1 |
| 2 | 5 | 2 | 2 | 0.1 |
| 1 | 4 | 0.8 | 0.9 | 0.1 |
| 0.5 | 4 | 0.3 | 0.2 | 0.01 |
| 0.1 | 0.8 | 0.1 | 0.1 | 0.01 or less |

The spacing $\bar{D}$ between the heating means for each of Type A, C and D was set to 3 cm. The spacing $\bar{D}$ between the heating means of Type B was set to 2 cm. From the comparison of the above results of Type A and Type B, it is clear that those having a wider spacing between the heating means and liable to occur the convection of the photographic process waste liquor can alleviate the generation of bad odor.

The apparatus of this invention, for treating the photographic process waste liquor, is set its heat-applying capacity to 20 W/cm² or less as described above, and the precipitate generated by concentration by evaporation due to heating by means of the heating means is separated by means of the precipitate separating means and discharged. The heating by the heating means is effected with the heat-applying capacity under the predetermined amount, and also the precipitate generated by concentration by evaporation due to heating is separated and discharged. Accordingly, continuous heating of the precipitate remaining in the vicinity of the heating means for a long time, overheat decomposition of the precipitate is prevented, the generation of sulfur series odor is alleviated, and also the iodine presumption amount is alleviated and the burden to environmental pollution can be alleviated at a low cost. Moreover, providing a means for accelerating the convection of the photographic process waste liquor, partial overheating of the photographic process waste liquor can be prevented and the generation of bad odor can preferably be further inhibited. Further, by separating the precipitate, which is generated by concentration by evaporation due to heating by the heating means, by means of the precipitate separating means to discharge it, the precipitate generated by heating of the heating means is no more remain in the vicinity of the heating means to be heated. Accordingly, further alleviation of bad odor can be accomplised.

## Claims

1. An apparatus for treating photographic process waste liquor in which the photographic process waste liquor stored in an evaporation means (1) is heated by a heating means (2) having a heat applying capacity of 20 W/cm$^2$ or less and concentrated by evaporation, characterised in that the apparatus further comprises a filter means (74,112) for separating a precipitate generated by concentration by evaporation due to heating by the heating means and to discharge the precipitate from a liquid fraction and in that the liquid fraction is recycled.

2. The apparatus according to claim 1, characterised in that the evaporated liquid is condensed by condensing means (11) and recycled.

3. The apparatus according to claims 1 or 2, characterised in that the apparatus further comprises a removing means for accelerating removal of vapour cells formed on a surface of at least one of the heating means (2) and the evaporating means (1) on which the photographic waste liquor is in contact.

4. The apparatus according to claim 3, characterised in that the removing means has a means (8) which supplies gas into the photographic process waste liquor thereby agitating the liquor.

5. The apparatus according to claim 4, characterised in that the amount of gas supplied is 2% or more than the amount of vapour generated by evaporation.

6. The apparatus according to claim 3, characterised in that the removing means has a means (81,85,111) which forcedly circulates the photographic process waste liquor thereby agitating the liquor.

7. The apparatus according to claim 6, characterised in that the diffusion ratio of the circulation represented by the ascending linear velocity is from 0.05 cm/s to 1 m/s.

8. The apparatus according to claim 3, characterised in that the removing means has a means (73,83) which vibrates the photographic process waste liquor with ultrasonic waves thereby agitating the liquor.

9. The apparatus according to claim 8, characterised in the frequency of the ultrasonic waves lies in the range 10 kHz to 100 kHz.

10. The apparatus according to claim 3, characterised in that the removing means has a means which vibrates the photographic process waste liquor whereby vibration is applied to the heating means (2) in the evaporating means (1).

11. The apparatus according to claim 3, characterised in that the surface of at least one of the heating means (2) and the evaporating means (1) is fabricated in a concave-convex pattern.

12. The apparatus according to any of the preceding claims, characterised in that the apparatus further comprises a magnetic field producing means for applying a magnetic field to at least one of the photographic process waste liquor and the vapor generated by evaporation.

13. The apparatus according to claim 12, characterised in that the magnetic field has a strength fin the range 0.01 to 10$^5$ gauss.

14. The apparatus according to claim 12, characterised in that the heating means (2) serves as the magnetic field producing means.

15. The apparatus according to any of the preceding claims, characterised in that the apparatus further comprises a means for accelerating convection of the photographic waste liquor during heating by the heating means (2).

EP 0 306 294 B1

**16.** A method for treating photographic process waste liquor in which the photographic process waste liquor stored in an evaporation means (1) is heated at a rate of 20 W/cm² or less and concentrated by evaporation, characterised in that precipitate generated by concentration due to the evaporation of liquid caused by the heating is separated and discharged from the liquid fraction by a filter means (74,112) and in that the liquid fraction is recycled.

**Patentansprüche**

**1.** Vorrichtung zur Behandlung von Abwasser aus Photoprozessen, die das in einer Verdampfungsvorrichtung (1) aufbewahrte Abwasser aus Photoprozessen mittels eines Heizmittels (2) mit einer Heizleistung von 20 W/cm² oder weniger erhitzt und eindampft, dadurch gekennzeichnet, daß die Vorrichtung weiterhin ein Filtermittel (74,112) zum Abtrennen des beim Eindampfen als Folge des Erhitzens mittels des Heizmittels gebildeten Niederschlags von einem flüssigen Anteil aufweist, und daß man den flüssigen Anteil rückführt.

**2.** Vorrichtung nach Anspruch 1, dadurch gekennzeichnet, daß sie die verdampfte Flüssigkeit mit Hilfe von Kondensationsmitteln (11) kondensiert und rückführt.

**3.** Vorrichtung nach Anspruch 1 oder 2, dadurch gekennzeichnet, daß die Vorrichtung weiterhin ein Entfernungsmittel zum beschleunigten Entfernen von auf der Oberfläche mindestens einem der Heizmittel (2) und dem Verdampfungsmittel (1), mit dessen Oberfläche das Abwasser aus dem Photoprozess in Berührung steht, gebildeten Dampfzellen aufweist.

**4.** Vorrichtung nach Anspruch 3, dadurch gekennzeichnet, daß das Entfernungmittel ein Mittel (8) aufweist, das Gas in das Abwasser aus Photoprozessen einleitet, wodurch das Abwasser in Bewegung gehalten wird.

**5.** Vorrichtung nach Anspruch 4, dadurch gekennzeichnet, daß die eingeleitete Gasmenge mehr als 2% oder mehr als die durch das Verdampfen erzeugte Dampfmenge beträgt.

**6.** Vorrichtung nach Anspruch 3, dadurch gekennzeichnet, daß das Entfernungsmittel ein Mittel (81, 85, 111) aufweist, das das Abwasser aus Photoprozessen umpumpt, wodurch das Abwasser in Bewegung gehalten wird.

**7.** Vorrichtung nach Anspruch 6, dadurch gekennzeichnet, daß das durch die lineare Steiggeschwindigkeit angegebene Diffusionsverhältnis beim Umpumpen 0,05 cm/s bis 1 m/s beträgt.

**8.** Vorrichtung nach Anspruch 3, dadurch gekennzeichnet, daß das Entfernungsmittel ein Mittel (73, 83) aufweist, das das Abwasser aus Photoprozessen mit Hilfe von Ultraschallwellen in Schwingungen versetzt, wodurch das Abwasser in Bewegung gehalten wird.

**9.** Vorrichtung nach Anspruch 8, dadurch gekennzeichnet, daß die Frequenz der Ultraschallwellen im Bereich von 10 KHz bis 100 KHz liegt.

**10.** Vorrichtung nach Anspruch 3, dadurch gekennzeichnet, daß das Entfernungsmittel ein Mittel aufweist, das das Abwasser aus Photoprozessen in Schwingungen versetzt, wodurch das Heizmittel (2) im Verdampfungsmittel (1) Schwingungen ausgesetzt wird.

**11.** Vorrichtung nach Anspruch 3, dadurch gekennzeichnet, daß die Oberfläche mindestens eines der Heizmittel (2) und der Verdampfungsmittel (1) in konkav-konvexer Form ausgebildet ist.

**12.** Vorrichtung nach einem der vorhergehenden Ansprüche, dadurch gekennzeichnet, daß die Vorrichtung weiterhin ein Mittel zur Erzeugung eines Magnetfelds aufweist, um auf mindestens eines der Abwässer aus Photoprozessen und den durch Verdampfung erzeugten Dampf ein Magnetfeld einwirken zu lassen.

**13.** Vorrichtung nach Anspruch 12, dadurch gekennzeichnet, daß das Magnetfeld eine Feldstärke im Bereich von 0,01 bis 10⁵ Gauß aufweist.

26

**14.** Vorrichtung nach Anspruch 12, dadurch gekennzeichnet, daß das Heizmittel (2) als das magnetfelderzeugende Mittel dient.

**15.** Vorrichtung nach einem der vorhergehenden Ansprüche, dadurch gekennzeichnet, daß die Vorrichtung weiterhin ein Mittel zur Beschleunigung der Konvektion des Abwassers aus Photoprozessen beim Erhitzen durch das Heizmittel (2) aufweist.

**16.** Verfahren zur Behandlung von Abwasser aus Photoprozessen, wobei man das in einer Verdampfungsvorrichtung (1) aufbewahrte Abwasser aus Photoprozessen mit einer Heizleistung von 20 W/cm² oder weniger erhitzt und eindampft, dadurch gekennzeichnet, daß man den beim Eindampfen als Folge des Erhitzens gebildeten Niederschlag von dem flüssigen Anteil mit Hilfe eines Filtermittels (74,112) abtrennt und daß man den flüssigen Anteil rückführt.

**Revendications**

**1.** Appareil pour le traitement de liqueur usée de procédé photographique, dans lequel la liqueur usée de procédé photographique stockée dans un dispositif d'évaporation (1) est chauffée par un dispositif de chauffage (2) ayant une capacité de chauffage de 20 W/cm² ou moins et concentrée par évaporation, caractérisé en ce que l'appareil comprend en outre un dispositif de filtration (74, 112) pour séparer un précipité forme par la concentration par évaporation du fait du chauffage au moyen du dispositif de chauffage et éliminer le précipité de la fraction liquide et en ce que la fraction liquide est recyclée.

**2.** Appareil selon la revendication 1, caractérisé en ce que le liquide évaporé est condensé par un dispositif de condensation (11) et recyclé.

**3.** Appareil selon la revendication 1 ou 2, caractérisé en ce que l'appareil comprend en outre un dispositif d'élimination pour accélérer l'élimination des cellules de vapeur formées sur une surface de l'un au moins du dispositif de chauffage (2) et du dispositif d'évaporation (1) sur laquelle la liqueur photographique usée est en contact.

**4.** Appareil selon la revendication 3, caractérisé en ce que le dispositif d'élimination possède un dispositif (8) qui envoie du gaz dans la liqueur usée de procédé photographique, ce qui agite la liqueur.

**5.** Appareil selon la revendication 4, caractérisé en ce que la quantité de gaz envoyée est supérieure de 2% ou plus à la quantité de vapeur produite par l'évaporation.

**6.** Appareil selon la revendication 3, caractérisé en ce que le dispositif d'élimination possède un dispositif (81, 85, 111) qui fait circuler de force la liqueur usée de procédé photographique en agitant ainsi la liqueur.

**7.** Appareil selon la revendication 6, caractérisé en ce que le taux de diffusion de la circulation, représenté par la vitesse linéaire ascendante, est de 0,05 cm/s à 1 m/s.

**8.** Appareil selon la revendication 3, caractérisé en ce que le dispositif d'élimination possède un dispositif (73, 83) qui fait vibrer la liqueur usée de procédé photographique avec des ondes ultrasoniques, ce qui agite la liqueur.

**9.** Appareil selon la revendication 8, caractérisé en ce que la fréquence des ondes ultrasoniques se situe dans la gamme de 10 kHz à 100 kHz.

**10.** Appareil selon la revendication 3, caractérisé en ce que le dispositif d'élimination possède un dispositif qui fait vibrer la liqueur usée de procédé photographique, ce qui applique une vibration au dispositif de chauffage (2) dans le dispositif d'évaporation (1).

**11.** Appareil selon la revendication 3, caractérisé en ce que la surface de l'un au moins du dispositif de chauffage (2) et du dispositif d'évaporation (1) est fabriquée selon un dessin concave-convexe.

**12.** Appareil selon l'une quelconque des revendications précédentes, caractérisé en ce que l'appareil

27

comprend en outre un moyen de production d'un champ magnétique pour appliquer un champ magnétique sur l'une au moins de la liqueur usée de procédé photographique et de la vapeur produite par l'évaporation.

13. Appareil selon la revendication 12, caractérisé en ce que le champ magnétique a une intensité dans la gamme de 0,01 à $10^5$ gauss.

14. Appareil selon la revendication 12, caractérisé en ce que le dispositif de chauffage (2) sert de moyen de production du champ magnétique.

15. Appareil selon l'une quelconque des revendications précédentes, caractérisé en ce que l'appareil comprend en outre un moyen pour accélérer la convexion de la liqueur usée de procédé photographique au cours du chauffage par le dispositif de chauffage (2).

16. Procédé de traitement d'une liqueur usée de procédé photographique, dans lequel la liqueur usée de procédé photographique stockée dans un dispositif d'évaporation (1) est chauffée à un taux de 20 $W/cm^2$ ou moins et concentrée par évaporation, caractérisé en ce que le précipité formé par la concentration du fait de l'évaporation du liquide causée par le chauffage est séparé et éliminé de la fraction liquide par un dispositif de filtration (74, 112) et en ce que la fraction liquide est recyclée.

# FIG.1

# FIG. 2

# F I G. 3

# F I G. 4

# F I G. 5

# F I G. 6

# F I G. 7

# F I G. 8

# F I G. 9

EP 0 306 294 B1

F I G. 10

35

# F I G. 11

# FIG. 12

# F I G. 13

111

112

112d

# F I G. 14

112

112a

112f

112e

111

# F I G. 15

# F I G. 16

F I G. 17

# FIG. 18

Evaporation
vessel

Evaporation
vessel

112n

112

112m
112k

112s

110

112P

P

M ~112t

111

# FIG. 19

Evaporation
vessel

Evaporation
vessel

112s  112q

112

112m
112k

110

112p

P

M ~112t

111

# F I G. 20

Evaporation
vessel

Evaporation
vessel

# F I G. 21

# F I G. 22

# F I G. 23

# F I G. 24